(19) Europäisches Patentamt
European Patent Office
Office européen des brevets

(11) **EP 2 619 449 B1**

(12) **EUROPÄISCHE PATENTSCHRIFT**

(45) Veröffentlichungstag und Bekanntmachung des Hinweises auf die Patenterteilung:
**20.07.2016 Patentblatt 2016/29**

(51) Int Cl.:
*F03D 3/06* *(2006.01)*  *F03D 3/04* *(2006.01)*
*F03D 9/00* *(2016.01)*

(21) Anmeldenummer: **11767374.9**

(22) Anmeldetag: **14.09.2011**

(86) Internationale Anmeldenummer:
**PCT/EP2011/004601**

(87) Internationale Veröffentlichungsnummer:
**WO 2012/038043 (29.03.2012 Gazette 2012/13)**

(54) **ZWILLINGSTURBINENSYSTEM, DAS DEM WIND/WASSER FOLGT (WINDTRACKER), FÜR WIND- UND/ODER WASSERKRAFT, MIT OPTIMIERTER FLÜGELFORM**

TWIN TURBINE SYSTEM WHICH FOLLOWS THE WIND/WATER (WINDTRACKER) FOR WIND AND/OR WATER POWER, WITH OPTIMIZED BLADE SHAPE

SYSTÈME DE TURBINES JUMELLES, QUI SUIT LE VENT OU L'EAU (SUIVEUR DE VENT), POUR ÉNERGIE ÉOLIENNE ET/OU HYDRAULIQUE, POSSÉDANT UNE FORME D'AUBE OPTIMISÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.08.2011 DE 102011109215**
**11.06.2011 DE 202011101729 U**
**02.02.2011 DE 102011010176**
**13.12.2010 DE 102010054365**
**21.09.2010 DE 102010045915**

(43) Veröffentlichungstag der Anmeldung:
**31.07.2013 Patentblatt 2013/31**

(73) Patentinhaber: **Steel, Dennis Patrick**
**47441 Moers (DE)**

(72) Erfinder: **Steel, Dennis Patrick**
**47441 Moers (DE)**

(74) Vertreter: **Schoenen, Norbert**
**Postfach 10 22 09**
**47412 Moers (DE)**

(56) Entgegenhaltungen:
**WO-A2-2004/099605   DE-A1- 10 024 044**
**DE-U1- 20 200 853   JP-A- 2009 074 403**
**US-A- 4 037 983   US-A1- 2004 141 845**
**US-A1- 2008 085 179**

**Beschreibung**

Die Erfindung betrifft ein Turbinensystem nach dem Oberbegriff des Anspruchs 1.

Stand der Technik

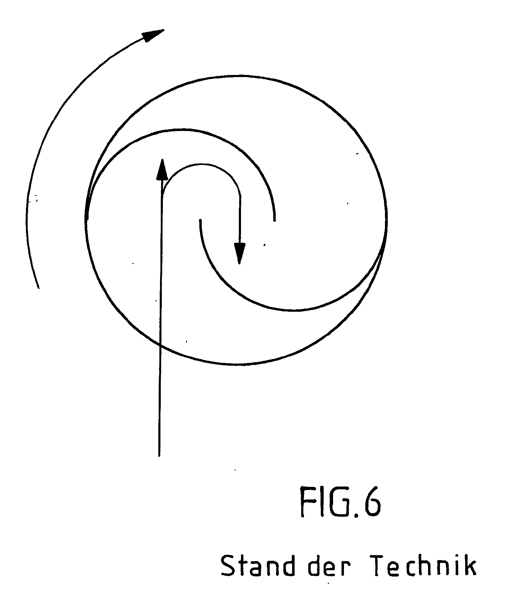

Bekannt sind Savonius-Turbinen (siehe auch Figur 6). Diese Rotoren können aus zwei an einer vertikalen Rotorachse angebrachten waagerechten Kreisscheiben bestehen, zwischen denen zwei halbkreisförmige gebogene Schaufeln bzw. Flügel senkrecht stehend angebracht sind.

Eine ausgeprägte Unwucht aufgrund der zyklisch unterschiedlich starken Belastung durch die Strömung während der Rotation ist charakteristisch für den Savonius-Rotor, auch wenn die Gewichtsverteilung perfekt austariert ist. Diese durch Lastwechsel verursachte Unwucht kann minimiert werden, indem statt der zwei Schaufeln eine größere Anzahl, meist drei, angeordnet werden. Dann aber sinkt der Wirkungsgrad des Savonius-Rotors erheblich, etwa um 30 %.

Eine Radialturbine hat gegenüber den bekannten dreiflügeligen Windkraftanlagen mit horizontaler Drehachse und Flugzeugflügeln den großen Vorteil, unabhängig von der Richtung des einfallenden Windes zu arbeiten. Die Radialturbine mit einer vertikalen Rotationsachse muss also nicht in den Wind gedreht werden.

In einer besonders wirtschaftlichen Ausführungsform ist die Radialturbine mit Leitblechen versehen, die die Windenergie sammeln und konzentriert auf die Schaufeln der Radialturbine leiten. Nachteilig ist hier jedoch, dass infolge des Leitbleches die Unabhängigkeit von der Windrichtung nicht mehr gegeben ist. Auch die Radialturbine mit Leitblech muss daher dem Wind nachgeführt werden.

Wird die Savonius-Turbine mit Leitblechen ausgerüstet, gewinnt sie bei niedriger Windgeschwindigkeit, verliert aber umso mehr bei höherer Windgeschwindigkeit.

Die Erfindung und der Anspruch 1 gehen von der WO 2004/099605 A2 als nächstliegendem Stand der Technik aus. Hier wird eine Windturbine mit Leitflächen offenbart, die außerdem die Merkmale des Oberbegriffes des Anspruchs 1 aufweist. Das Turbinensystem zeigt allerdings nur eine einzige Turbine.

Bekannt ist ferner ein Turbinensystem mit zwei Windturbinen mit vertikaler Achse (US 2004/0141845 A1). Dieses Turbinensystem weist außerdem einen V-förmigen Windverteiler auf. Es ist um eine Schwenkachse parallel zu den Turbinenachsen verschwenkbar, wobei die Schwenkachse und der V-förmige Windverteiler außerhalb der Verbindungslinie der Turbinenachsen und beide auf der gleichen Seite der Verbindungslinie liegen.

Aufgabe und Lösung der Erfindung

Aufgabe der Erfindung: Erreicht werden soll eine erheblich verbesserte Ausnutzung der Windenergie mit einem deutlich besseren Wirkungsgrad als bei herkömmlichen Savonius-Turbinen. Die Windturbine soll auch bei so schwachem Wind einsetzbar sein, der zu schwach ist, um herkömmliche Savonius-Turbinen anzutreiben.

Die Windturbine soll geräuschlos und äußerst vibrationsarm arbeiten, so dass sie auch im urbanen Bereich auf Wohngebäuden angebracht werden kann.

Es soll außerdem eine Radialturbine mit Leitblech eingesetzt werden, die sich selbsttätig in eine optimale Winkelposition zum einfallenden Wind dreht, sich also selber nachführt, ohne dass hierfür eine Nachführungsanordnung erforderlich wäre. Die Vorteile des Leitbleches bei der Radialturbine sollen also kombiniert werden mit der Unabhängigkeit der Radialturbine von der einfallenden Windrichtung.

Eine minimale Unwucht bei hoher Leistung soll durch die spezielle Konstruktion und Geometrie gewährleistet sein.

Diese Aufgabe wird erfindungsgemäß durch die Merkmale des Anspruchs 1 gelöst.

Vorteilhafte Ausgestaltungen der Erfindung sind in den Unteransprüchen angeführt.

Es ist bekannt, dass der Savonius-Rotor und der Darrieus-Rotor durch Leitbleche nicht an Leistung gewinnen. Der Savonius-Rotor gewinnt bei schwachem Wind bedingt an Geschwindigkeit, aber das führt zum Verlust bei höherer Windgeschwindigkeit. Da die Turbine von der Windrichtung abhängt, verliert sie an Gesamt-Wirkungsgrad.

Dieses Problem wird durch die Erfindung gelöst.

a) Durch die aerodynamische Nase (Windverteiler) zusammen mit der neu konstruierten Turbine wird nachweislich mehr Energieausbeute bei allen Windstärken.
b) Durch die optimale Anordnung der aerodynamischen Teile, auch der Drehverbindung, folgt das Turbinensystem dem Wind in alle Richtungen ohne Motorantrieb.

Durch die spezifische Form und Anordnung der Turbinenflügel in Verbindung mit dem Windverteiler entsprechend den in Anspruch 1 genannten Parameterbereichen erhält man bis zu dreimal höhere Drehzahlen im Vergleich zu bekannten Savonius-Turbinen sowie einen realisierten Wirkungsgrad von bis zu 66 % im Vergleich zu einem Wirkungsgrad von 28 % bei herkömmlichen Turbinen. Auch bei sehr schwachem Wind lässt sich die erfindungsgemäße Turbine einsetzen, welcher zum Antrieb herkömmlicher Savonius-Turbinen nicht mehr ausreicht.

Im Gegensatz zum Savonius-Rotor hat die erfindungsgemäße Windturbine keine derartige oben beschriebene Unwucht, auch wenn in einer besonders vorteilhaften Ausgestaltung drei Turbinenflügel vorgesehen sind.

Besonders günstig ist die Kombination der erfindungsgemäßen Geometrie der Turbinenflügel zusammen mit einer Leitfläche gemäß Anspruch 5, die auch Windverteiler genannt werden kann.

Wichtig ist außerdem Folgendes: Zwei Turbinen befinden sich in einem durch Leitbleche geschlossenem System mit zusätzlichen abgekanteten Konzentrations- und/oder Windführungsblechen, welche oberhalb und unterhalb der Turbinen angebracht sind. Durch das geschlossene System und die zusätzlichen Konzentrations- und/oder Windführungsbleche wird der sog. "Magnus-Effekt" optimal ausgenutzt, wodurch das erfindungsgemäße System, welches auf einem Mast gelagert ist, sich eigenständig in den Wind drehen und somit immer optimal vom Wind angeströmt werden kann. Das "In den Wind drehen" ist bei mehreren konkreten Modellen im freien Wind nachgewiesen worden.

Der Magnus-Effekt, benannt nach seinem Entdecker Heinrich Gustav Magnus (1802-1870), ist ein Phänomen der Strömungsmechanik, nämlich die Querkraftwirkung (Kraft), die ein rotierender runder Körper (Zylinder oder Kugel) in einer Strömung erfährt.

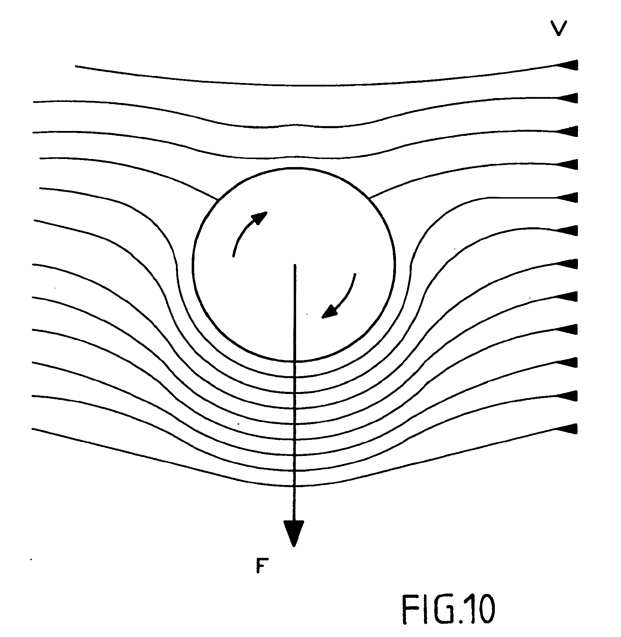

Eine rotierende Walze erzeugt aufgrund von Reibungseffekten eine Rotation des sie umgebenden Fluids um sich herum. Wird die Walze zusätzlich angeströmt, überlagern sich die Geschwindigkeiten des Fluids. Das Resultat ist, dass das Fluid die rotierende Walze auf einer Seite schneller umströmt als auf der anderen (im Ruhesystem der Walze). Auf der Seite der Walze, auf der die Reibungseffekte größer sind, fließt das Fluid scheinbar schneller. Dies resultiert in einem "Ausweichen" der Walze - die Walze wird nach unten gedrückt (siehe Figur 10).

Beispiele:

- Fußballspieler schießen den Ball mit Effet, damit er in einem Bogen ins Tor fliegt. Je schneller er dreht, umso größer ist die Bahnablenkung (Bananenflanke, Flatterball).
- Tischtennisspieler und Tennisspieler nutzen den Effekt, z.B. beim Topspin und Slice.
- Curveballs im Baseball oder Riseballs im Softball
- Spin bowling im Cricket
- Golfbälle besitzen viele kleine Vertiefungen auf der Oberfläche, sogenannte *Dimples.* Sie verbessern als Turbulatoren das Anhaften der am Ball anliegenden und durch seine Rotation mitgeführten Grenzschicht. Dadurch verstärkt sich die Wirbelbildung und die damit einhergehende Ablenkung des Balls durch den Magnus-Effekt. Da der Golfball durch die Keilform des Golfschlägers rückwärts rotiert, wird er durch den Magnus-Effekt angehoben; er fliegt nicht nur wie eine Kanonenkugel, sondern erfährt einen Auftrieb. Zusätzliche Links- oder Rechts-Ablenkungen sind möglich und werden von Spielern, die diese Technik beherrschen, auch eingesetzt. Außerdem wird durch die überkritische, turbulente Umströmung der Luftwiderstand verringert, was wiederum zu größeren Flugweiten führt.

Erfindungsgemäß wird eine hohe Leistung kombiniert mit niedrigen Installationskosten erreicht, so dass die Wirtschaftlichkeit, bezogen auf die erzeugte Strommenge erheblich besser als bei den bekannten Windkraftanlagen mit horizontaler Achse und Flugzeugflügeln ist.

Zur Steigerung der Wirtschaftlichkeit ist ein Ringgenerator zur Stromerzeugung vorgesehen. Zusätzlich kann zur weiteren Steigerung der Wirtschaftlichkeit der Mast und der Windverteiler als Werbefläche eingesetzt werden.

Von besonderem Vorteil bei der erfindungsgemäßen Flügelform der Einzelturbinen und der spezifischen Anordnung der beiden Turbinen zueinander ist es, dass sich die beiden Turbinen nicht gegenseitig behindern, sondern - unterstützt durch die im rückseitigen Hohlraum des V-förmigen Windverteilers stattfindende niederfrequente Druckschwingung - sogar bei niedrigen Windgeschwindigkeiten gegenseitig fördern.

Im Gegensatz zu den bekannten Windkraftanlagen mit horizontaler Achse und drei Flügeln kann die erfindungsgemäße Radialturbine auch bei relativ niedrigen Windgeschwindigkeiten betrieben werden. Aufgrund des Magnus-Effektes "zieht" die erfindungsgemäße Radialturbine sozusagen den Wind an und verstärkt geringe Windgeschwindigkeiten. Beispielsweise kann die erfindungsgemäße Radialturbine auch bei Zirkulationswinden eingesetzt werden, bei denen die Windgeschwindigkeit unten bei geringer Höhe höher als in großer Höhe ist, in welcher die dreiflügeligen Windkraftanlagen allein schon wegen der Flügelgröße betrieben werden müssen. Eine Windgeschwindigkeit, die auf jeden Fall zu niedrig ist für die bekannten Dreiflügler, reicht bei der erfindungsgemäßen Radialturbine zur Energieerzeugung aus.

Bei Schwankungen der Windrichtung passt sich die erfindungsgemäße Radialturbine, unter anderem auch aufgrund des Magnus-Effektes, selbsttätig an und dreht sich sofort in die optimale Richtung, auch bei Windgeschwindigkeiten unter 1 m/s. Derartige schnelle Anpassungen der Windkraftanlage sind bei den bekannten Dreiflüglern nicht möglich.

Da die erfindungsgemäße Radialturbine nur wenig Platz beansprucht, kann sie als Zusatz bei bereits vorhandenen Gebäude- oder Bauteilen verwendet werden, beispielsweise als Aufsatz auf eine Straßenlaterne.

Ausführungsbeispiele

Im Folgenden werden mehrere Ausführungsbeispiele der Erfindung anhand von Zeichnungen näher beschrieben. In allen Zeichnungen haben gleiche Bezugszeichen die gleiche Bedeutung und werden daher gegebenenfalls nur einmal erläutert.
Es zeigen

| | |
|---|---|
| Figur 1 | einen schematischen Querschnitt durch die erfindungsgemäße Windturbine nach einem besonders bevorzugten Ausführungsbeispiel, |
| Figur 2 | eine graphische Darstellung der Freilaufdrehzahlen, aufgetragen über der Windgeschwindigkeit, für die erfindungsgemäße Windturbine (obere Kurve und Kreuze) und für eine herkömmliche Savonius-Windturbine (untere Kurve und Kreise), |
| Figuren 3 bis 5 | graphische Darstellungen der Drehzahlen der erfindungsgemäßen Windturbine sowie einer herkömmlichen Savonius-Windturbine sowie des Anströmwinkels des Windes und der Windgeschwindigkeit, aufgetragen über die Zeit, und |
| Figur 6 | eine schematische Darstellung einer herkömmlichen Savonius-Windturbine im Querschnitt mit deren Wirkungsweise, |
| Figur 7 | eine perspektivische Darstellung der erfindungsgemäßen Windkraftanlage mit zwei Radialturbinen, |
| Figur 8 | die konstruktiven Details eines Ausführungsbeispiels als Rohrmast-Aufhängungssystem in einer Ansicht von der Seite entsprechend A-A in Figur 9, |
| Figur 9 | eine Aufsicht auf die Windkraftanlage, |
| Figur 10 | eine rotierende Walze mit umgebenden Fluid, |
| Figur 11 | den Fadentest, |
| Figuren 12 bis 14 | weitere Varianten mit geänderten Windverteilern 29 und zusätzlichen Konzentrationsblechen 30, |
| Figur 15 | DM-DZ-Kennlinien, |
| Figur 16 | weitere Kennlinien, |
| Figuren 17 bis 26 | eine weiter verbesserte erfindungsgemäße Windkraftanlage in verschiedenen perspektivischen Ansichten, |
| Fig. 27a | eine Gittermastkonstruktion, die als Gerüst für das spezielle Akkumulatoren- und Turbinen-Aufhängungssystem genutzt wird und/oder werden kann, |
| Fig. 27b | den Schnitt A-A, |
| Fig. 28 | "Stützherzen", die mit einem Drehteil auf der Welle befestigt sind. |

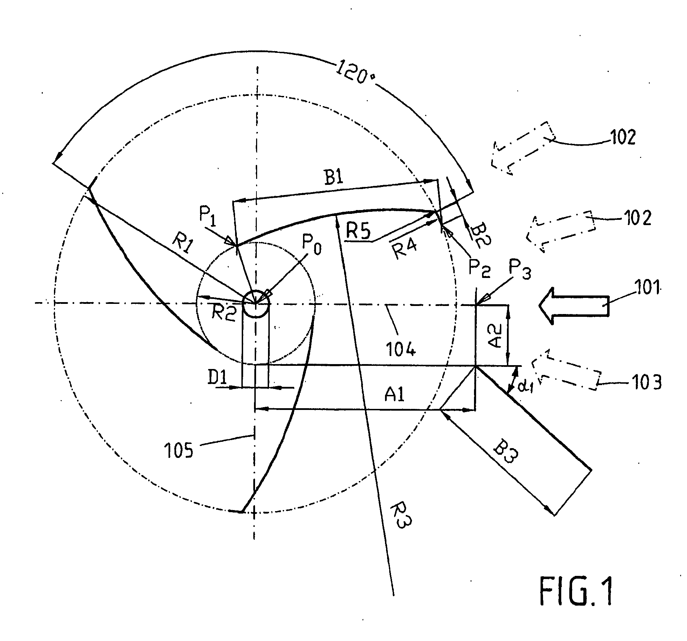

Die erfindungsgemäße Windturbine nach Figur 1 wird vom Wind in einer Hauptwindrichtung 101 und Nebenwindrichtungen 102, 103 angeströmt. Die Bedeutung der sonstigen Bezugszeichen in Figur 1 ergibt sich aus den nachfolgenden Tabellen 1 und 2, in welchen auch die erfindungsgemäßen Wertebereiche der Parameter sowie der besonders bevorzugte Wert der Parameter in den beiden Ausführungsbeispielen angegeben sind.
Oberhalb der Drehverbindung wird eine Gittermastkonstruktion vorgesehen, die als Gerüst für das spezielle Akkumulator-Aufhängungssystem und Turbinensystem genutzt wird und werden kann.
Unterhalb der Drehverbindung befindet sich ohne Zusatzkosten ein durch die Außenhaut des Mastes, vorzugsweise ein dickwandiges Stahlrohr, geschützter und geerdeter Sicherheitsraum, der verschiedene sensible technologische Komponenten enthalten kann. Aufgrund der erfindungsgemäßen Verwendung des Turbinensystems wird eine Möglichkeit geschaffen, in ansonsten nicht bebaubaren Gebieten Sicherheitsräume zu schaffen und Windkraftanlagen in der bereits vorhandenen Infrastruktur (Straßen, Schienen, etc.) einzusetzen.

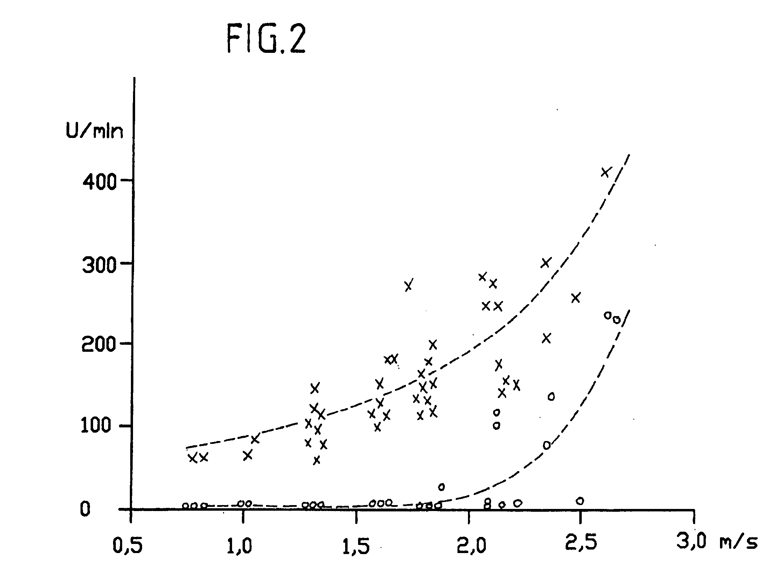

Figur 2 zeigt die Messergebnisse für die Freilaufdrehzahl der erfindungsgemäßen Windturbine und einer herkömmlichen Savonius-Windturbine. Aufgetragen sind die Drehzahlen in Umdrehungen pro Minute über der Windgeschwindigkeit in m/s. Die obere Kurve stellt eine Ausgleichskurve für die mit Kreuzen eingetragenen Drehzahlwerte der erfindungsgemäßen Windturbine dar. Die Messwerte für die herkömmliche Savonius-Windturbine sind mit Kreisen eingetragen. Die untere Kurve stellt eine Ausgleichskurve dar.
Deutlich erkennbar ist, dass in einem Bereich der Windgeschwindigkeit von etwa 0,7 bis 1,8 m/s eine herkömmliche Savonius-Turbine stillsteht, aber die erfindungsgemäße Windturbine mit Drehzahlen von 50 bis 150 Umdrehungen pro Minute rotiert. Im Windgeschwindigkeitsbereich von etwa 1,7 bis 2,7 rotiert die erfindungsgemäße Windturbine mit etwa der 2- bis 15-fachen Drehzahl wie die herkömmliche Savonius-Turbine.

| Tabelle 1: Parameter | Wertebereich des Parameters (1. Alternative) | Im 1. Ausführungsbeispiel: |
|---|---|---|
| R1 = Radius der Turbine | beliebig | 0,125 m |
| R2 = Abstand vom Rotationszentrum (Punkt $P_0$) bis zum inneren Flügelabschluss (Punkt $P_1$) = $f_1$ x R1 | $f_1$ = 0,28 ... 0,32 | 0,036 m |
| R3 = Krümmungsradius der am Punkt $P_1$ angrenzenden Zylinderschale eines Flügels =$f_2$ x R1 | $f_2$ = 1,2 ... 2,4 | 0,165 m |
| R4 = Krümmungsradius der am Punkt $P_2$ auf dem Außenradius der Turbine angrenzenden Zylinderschale eines Flügels = $f_3$ x R1 | $f_3$ > 0,7 | 0,125 m |
| R5 = Krümmungsradius der Knickstelle zwischen beiden Zylinderschalen eines Flügels =$f_4$ x R1 | $f_4$ = 0,02 ... 0,08 | 0,003 m |
| A1 = Abstand der der Turbine zugewandten Kante des Leitbleches (Punkt $P_3$) zur zweiten Längsschnittebene 5 (senkrecht zur ersten Längsschnittebene 4) =$f_5$ x R1 | $f_5$= 1,04 ... 1,10 | 0,135 m |
| A2 = Abstand der der Turbine zugewandten Kante des Leitbleches (Punkt $P_3$) zur ersten Längsschnittebene 4 (=Hauptwindrichtung) =$f_6$ x R1 | $f_6$ = 0,25 ... 0,30 | 0,035 m |
| B1 = Breite eines Turbinenflügels (Abstand zwischen den Punkten $P_1$ und $P_2$) =$f_7$ x R1 | $f_7$ = 0,9 ... 1,0 | 0,120 m |
| B2 = Breite der äußeren Zylinderschale eines Turbinenflügels (d.h. Abstand zwischen dem Schnittpunkt der jeweils extrapolierten Kreislinien beider Zylinderschalen eines Flügels und dem Punkt $P_2$) = $f_8$ x R1 | $f_8$ = 0,11 ... 0,16 | 0,016 m |
| B3 = Breite des Leitbleches =$f_9$ x R1 | $f_9$ = 0,7 ... 1,0 | 0,110 m |
| D1 = Durchmesser der Achse =$f_{10}$ x R1 | $f_{10}$ = 0,09 ... 0,13 | 0,012 m |
| $\alpha_1$ = Anstellwinkel des Leitbleches in Bezug auf die Hauptwindrichtung | $\alpha_1$ = 40° ... 60° | 45° |

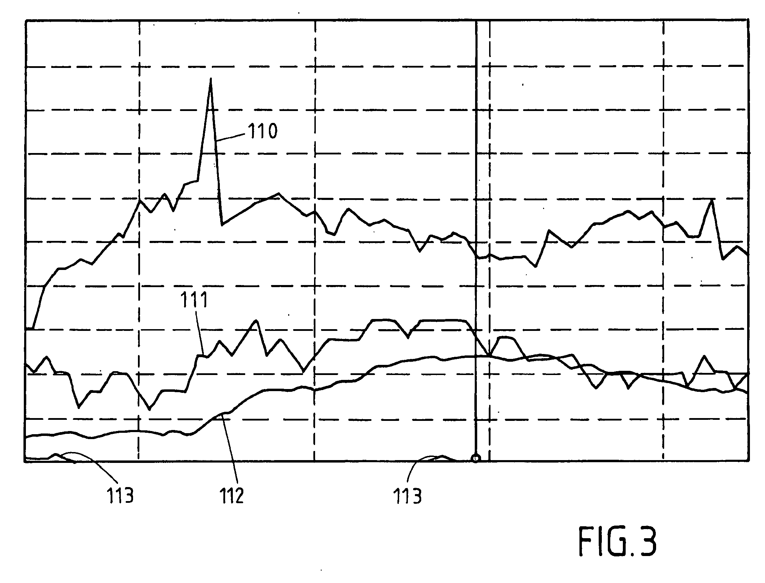

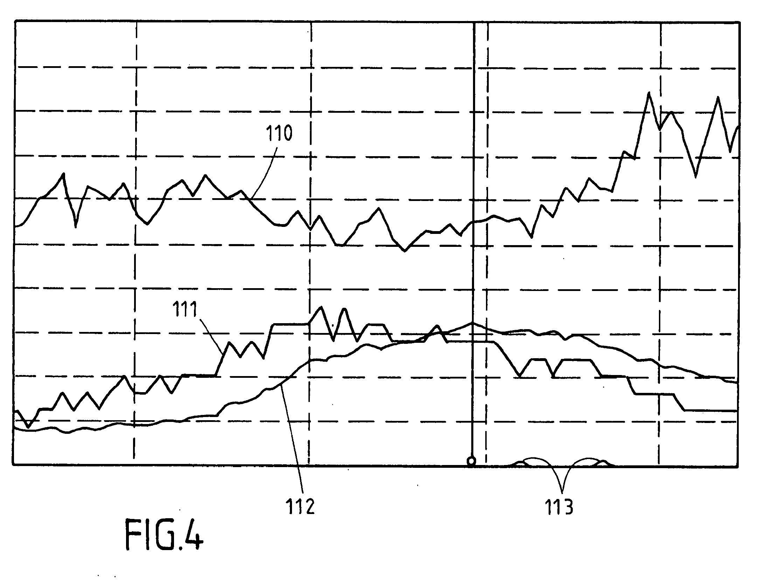

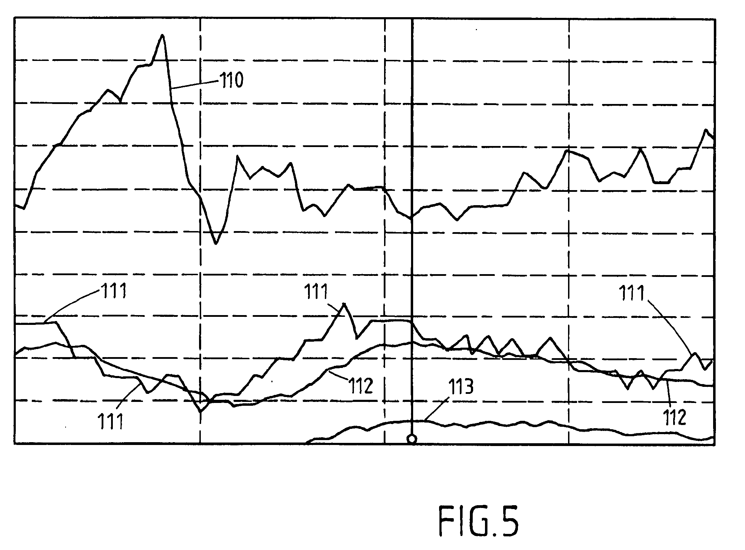

Ein Messprotokoll des Verhaltens der erfindungsgemäßen Windturbine und einer herkömmlichen Savonius-Windturbine, die beide den gleichen Windverhältnissen ausgesetzt waren, ist in den Figuren 3 bis 5 graphisch dargestellt. Die obere Kurve 110 gibt den jeweiligen Anströmwinkel des Windes im Bereich von +80° bis -80° wieder. Die Kurve 111 zeigt die Windgeschwindigkeit, in diesem Diagramm in einem Bereich von 0 bis 6,5 m/s. Die Kurve 112 zeigt die Umdrehungszahl der erfindungsgemäßen Windturbine in einem Bereich von 0 bis 500 Umdrehungen pro Minute. Die Kurve 113 zeigt die entsprechenden Drehzahlen für eine herkömmliche Savonius-Windturbine. Da die Savonius-Windturbine bei diesen Windgeschwindigkeiten häufig stillstand, bewegt sich die Kurve 113 immer nahe oder sogar auf der Nulllinie.

Als Stand der Technik wird in Figur 6 eine schematische Darstellung eines Savonius-Windrades wiedergegeben. Hier sind die Strömungsrichtung der Luft sowie die Rotationsrichtung dargestellt.

Ergänzend kann zum Stand der Technik festgestellt werden, dass sich vor allem 2 grundsätzliche Typen von Windkraftanlagen durchgesetzt haben:

a) Windturbinen mit horizontaler Achse (engl.: horizontal axis wind turbine [abgekürzt: HAWT]) und einer Windanströmung in Achsenrichtung

b) Windturbinen mit vertikaler Achse (engl.: vertical axis wind turbine [abgekürzt: VAWT]) und einer Windanströmung quer zur Achsenrichtung

Die hier beschriebene Erfindungslösung bezieht sich vor allem auf Turbinen von VAWT-Typ, wobei auch eine horizontale Lagerung bei einer Windanströmung quer zur Achsenrichtung in speziellen Fällen möglich ist.

Unter den VAWT-Typ-Anlagen findet man auf dem Markt zahlreiche Variationen/Abwandlungen, ausgehend von 2 Grundtypen (Quelle, z.B. Wikipedia "Windturbine"):

- Savonius-Rotor
- Giromill/Darrieus-Rotor

Im Gegensatz zur Turbine nach der Erfindung kann der Savonius-Rotor nicht durch ein Leitblech bzw. eine Leitfläche schneller laufen. Bei der Erfindung konnte dies aber nachgewiesen werden.

Die Variationen betreffen die Anzahl und die spezielle Form der Rotorblätter/-flügel, die Anbringung von Windführungselementen sowie teilweise eine schraubenförmige Gestaltung, um einen besseren Gleichlauf bei einer Umdrehung zu erreichen. Die erfindungsgemäße Lösung bezieht sich damit auf bestimmte, relativ genau bestimmte Formen und Anordnungen, die sich im Entwicklungsprozess als besonders effizient erwiesen haben.

Diese Erfindungsbeschreibung wird deshalb durch ein weiteres Ausführungsbeispiel in Verbindung mit einem weiteren eng begrenzten Parameterraum analog zu Tabelle 1 zur Formbeschreibung, wie folgt, ergänzt.

Das weitere Ausführungsbeispiel der erfindungsgemäßen Windturbine entspricht ebenfalls Figur 1; und es wird vom Wind in einer Hauptwindrichtung 101 und Nebenwindrichtungen 102, 103 angeströmt. Die Bedeutung der sonstigen Bezugszeichen in Figur 1 ergibt sich aus der obigen Tabelle 2, in welcher ergänzende bzw. erweiterte erfindungsgemäßen Wertebereiche der Parameter sowie der jeweils besonders bevorzugte Wert der Parameter im zweiten Ausführungsbeispiel angegeben ist.

Ergänzend wird darauf hingewiesen, dass die Höhe (bzw. Länge) der Turbine in einem weiten Verhältnisbereich zum Radius stehen kann. D.h. Höhe bzw. Länge der Turbine betragen je nach Einsatzort etwa das 0,3 bis 100-fache des Turbinenradius, wobei aus Konstruktions- bzw. Stabilitätsgründen eine lange bzw. hohe Turbine als formschlüssige Ankopplung mehrerer Turbinen auf einer ggf. mittels formschlüssiger Kupplungen flexibel verbundenen Welle verstanden werden kann.

Ziel des Turbinensystems ist es, optimal Energie aus dem Wind zu gewinnen, wobei die Gewinnung von Elektroenergie Priorität hat. Dazu wird ein Generator passend zum Turbinensystem mechanisch direkt bzw. indirekt über ein Getriebe kraft- oder formschlüssig mit der Turbinenachse verbunden, die mit den Turbinen kraft- oder formschlüssig verbunden ist, um die Kraftübertragung von Turbine auf den Generator zu gewährleisten. Es kann dabei ein Generator für beide Turbinen eingesetzt werden, oder jede Turbine wird einzeln mit jeweils einem Generator verbunden.

| Tabelle 2: Parameter | Wertebereich des Parameters (2. Alternative) | Im 2. Ausführungsbeispiel: |
|---|---|---|
| R1 = Radius der Turbine | beliebig | 0,510 m |
| R2 = Abstand vom Rotationszentrum (Punkt $P_0$) bis zum inneren Flügelabschluss (Punkt $P_1$) = $f_1$ x R1 | $f_1 = 0{,}19 \ldots 0{,}32$ | 0,110 m |
| R3 = Krümmungsradius der am Punkt $P_1$ angrenzenden Zylinderschale eines Flügels = $f_2$ x R1 | $f_2 = 1{,}2 \ldots 2{,}4$ | 0,685 m |
| R4 = Krümmungsradius der am Punkt $P_2$ auf dem Außenradius der Turbine angrenzenden Zylinderschale eines Flügels = $f_3$ x R1 | $f_3 > 0{,}7$ | > 0,50 m |
| R5 = Krümmungsradius der Knickstelle zwischen beiden Zylinderschalen eines Flügels = $f_4$ x R1 | $f_4 = 0{,}01 \ldots 0{,}08$ | 0,005 m |
| A1 = Abstand der der Turbine zugewandten Kante des Leitbleches (Punkt $P_3$) zur zweiten Längsschnittebene 5 (senkrecht zur ersten Längsschnittebene 4) = $f_5$ x R1 | $f_5 = 1{,}00 \ldots 1{,}10$ | 0,534 m |
| A2 = Abstand der der Turbine zugewandten Kante des Leitbleches (Punkt $P_3$) zur ersten Längsschnittebene 4 (=Hauptwindrichtung) = $f_6$ x R1 | $f_6 = 0{,}25 \ldots 0{,}55$ | 0,275 m |
| B1 = Breite eines Turbinenflügels (Abstand zwischen den Punkten $P_1$ und $P_2$) = $f_7$ x R1 | $f_7 = 0{,}9 \ldots 1{,}1$ | 0,535 m |

(fortgesetzt)

| Tabelle 2: Parameter | Wertebereich des Parameters (2. Alternative) | Im 2. Ausführungsbeispiel: |
|---|---|---|
| B2 = Breite der äußeren Zylinderschale eines Turbinenflügels (d.h. Abstand zwischen dem Schnittpunkt der jeweils extrapolierten Kreislinien beider Zylinderschalen eines Flügels und dem Punkt $P_2$) =$f_8$ x R1 | $f_8$ = 0,11 ... 0,19 | 0,081 m |
| B3 = Breite des Leitbleches =$f_9$ x R1 | $f_9$ = 0,7 ... 2,5 | 1,12 m |
| D1 = Durchmesser der Achse = $f_{10}$ x R1 | $f_{10}$ = 0,03 ... 0,13 | 0,020 m |
| $\alpha_1$ = Anstellwinkel des Leitbleches in Bezug auf die Hauptwindrichtung | $\alpha_1$ = 40° ... 60° | 43° |

Der Generator wird passend zur Windgeschwindigkeit so gesteuert, dass durch Regelung der generierten Leistung ein elektromagnetisches Bremsmoment auf die Turbine übertragen wird, so dass sich eine optimale Schnelllaufzahl (engl. Tip Speed Ratio = TSR) zur Energiewandlung einstellt, die zwischen 45% und 65% bezogen auf die Schnelllaufzahl der ungebremsten Turbine beträgt. Damit wird erreicht, dass stets die maximal mögliche Energie "geerntet" werden kann.

Im Ausführungsbeispiel wird ein Verhältnis Höhe : Radius von ca. 20 eingestellt, wobei die Turbinen auf einer Welle alle ca. 5m einzelnen gelagert und über eine flexible, formschlüssige Kupplung aneinander und am Ende der Welle direkt bzw. indirekt über ein Getriebe mit einem Stromgenerator verbunden sind.

Zur Effizienzverstärkung können vorteilhaft zwei Turbinen-Leitblech-Systeme als Windverteiler-System spiegelbildlich zusammengeführt, so dass zum Beispiel bei senkrechter Drehachse und Blick in die Hauptwindrichtung das linke Leitblech den Wind zur linken Turbine und das rechte Leitblech den Wind zur rechten Turbine ableitet. Dabei können die Leitbleche zu einem geschlossenen Windführungssystem, dem Windverteiler, in Form einer "Nase" mit abgerundeten "Nasenrücken" als Verbindung der beiden Leitbleche vorteilhaft ausgebildet werden.

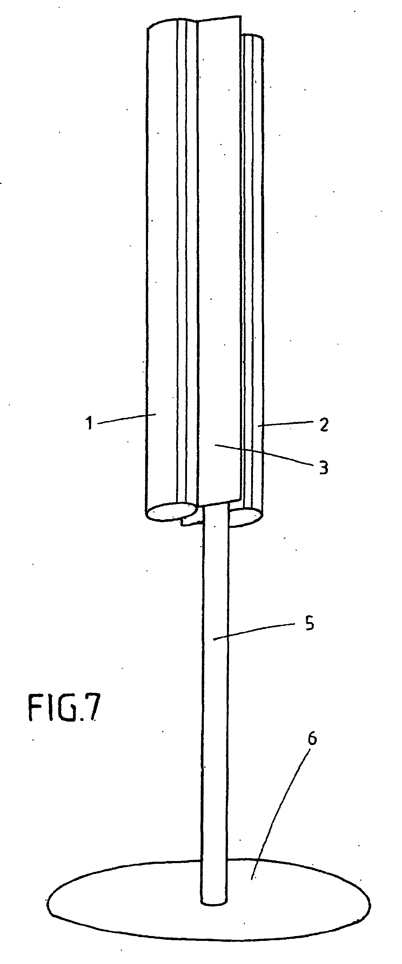

Figur 7 zeigt eine perspektivische Darstellung der erfindungsgemäßen Windkraftanlage mit zwei Radialturbinen 1, 2 und einem V-förmigen Windverteiler 3, wobei Radialturbinen und Windverteiler als Ganzes um eine vertikale Achse drehbar (schwenkbar) an einem Stahlmast 5 oder einem anderen Fundament 6 angebracht sind.

Vorzugsweise ist der Abstand des V-förmigen Windverteilers zu den Turbinen variabel und verstellbar, um für alle Windverhältnisse optimale Betriebsbedingungen zu erreichen.

Der V-förmige Windverteiler wird je nach Windgeschwindigkeit in die optimale Stellung, bezogen auf Abstand und Neigung zu den Turbinenblättern und der Turbinenachse, gebracht.

Bei einer Gesamthöhe von 20 m beträgt die Höhe der Turbinen 10 m. Die Turbinen haben einen Durchmesser von 1 m. Die erwartete Kapazität bei einem Küstenstandort, wo die Windkraftanlage den zirkulierenden Küstenwind auffängt, beträgt ca. 21700 kWh, jährlich gemittelt mit einem Wirkungsgrad von 38 %.

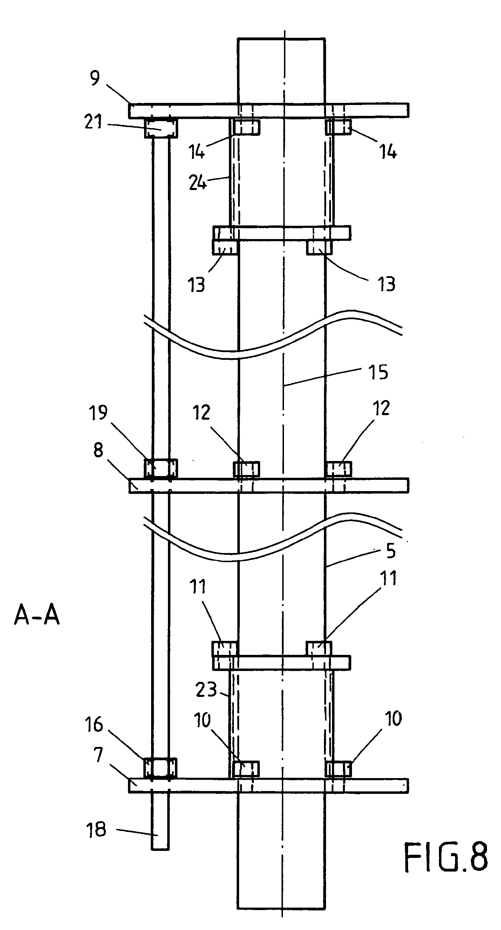

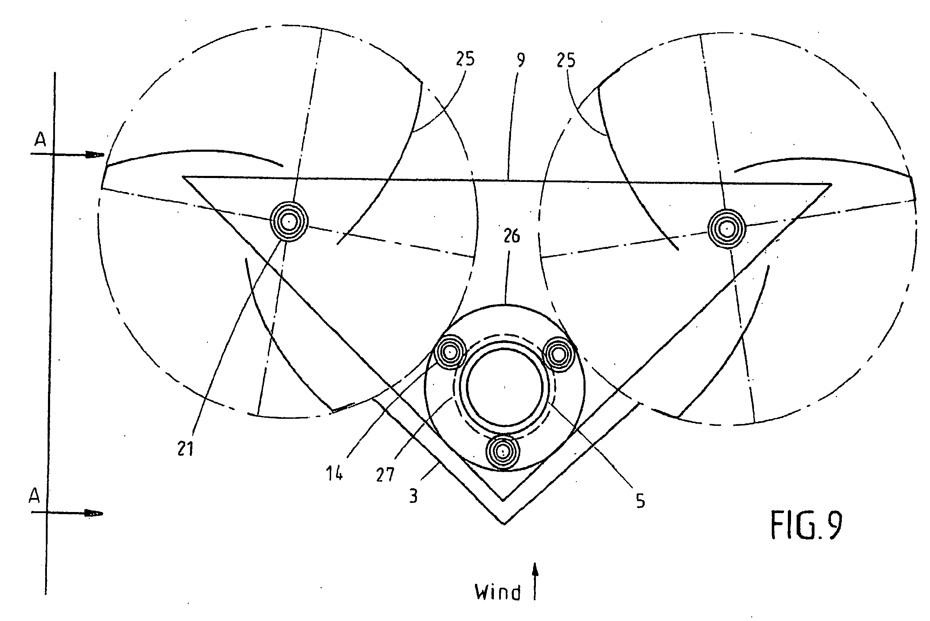

Figur 8 zeigt die konstruktiven Details eines Ausführungsbeispiels als Rohrmast-Aufhängungssystem in einer Ansicht von der Seite entsprechend A-A in Figur 9. An dem 20 m hohen Stahlmast 5 sind drei Trägerplatten 7, 8, 9 mittels Lager 10, 11, 12, 13, 14 drehbar um die Längsachse 15 des Stahlmastes 5 angebracht. Die untere Trägerplatte 7 hat drei Drehlager 10 am Stahlmast 5 und zwei Turbinenlager 16, 17 an der Turbinenachse 18. Die mittlere Trägerplatte 8 hat drei Drehlager 12 und zwei Turbinenlager 19, 20 und die obere Trägerplatte 9 hat drei Drehlager 14 und zwei Turbinenlager 21, 22. Die Turbinenlager 17, 20 und 22 sind in Figur 8 nicht dargestellt und gehören zur anderen Turbine.

Die Drehlager 10, 11 einerseits und 13, 14 andererseits sind durch einen Distanzkragen 23, 24 auf Abstand gehalten. Der Distanzkragen ist ausgebildet als Hohlrohr.

Figur 9 zeigt schließlich eine Aufsicht auf die Windkraftanlagen. Erkennbar sind die Turbinenschaufeln 25. Eingezeichnet ist mit einem Pfeil auch die Windrichtung, wenn sich die Windkraftanlage erfindungsgemäß in den Wind gedreht hat, so dass die Spitze des V-förmigen Windverteilers 3 dem Wind entgegen zeigt.

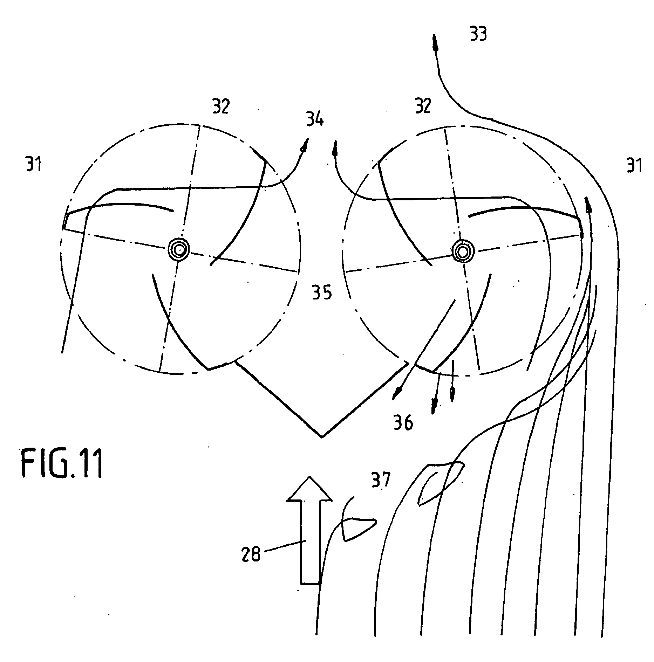

Mit der erfindungsgemäßen Anlage wurde ein so genannter Fadentest durchgeführt (Figur 11). Wind 28 bis 6 m/s blies gegen die Anlage. Das Verhältnis von der Umfangsgeschwindigkeit der Turbine zum Wind war bis zu 3 : 1. In Figur 11 ist der Abriss der Fadenrichtung (unten im Bild) deutlich erkennbar. Die erfindungsgemäße Anlage kann Energie aus der Druckdifferenz oder der potentiellen Energie des Windes extrahieren, nicht bloß aus der kinetischen Energie der bewegten Luft.

Die Bedeutung der Bezugszahlen in Figur 11 geht aus der Bezugszeichenliste hervor.

Ein Nebeneffekt ist der Pingpong-Ball, der in einem schrägen Luftstrahl "hängt": Durch den Coanda-Effekt löst die Strömung des Luftstrahles nicht vom Ball ab, sondern umrundet ihn (fast) völlig ohne Ablösung. Da der Ball leicht unterhalb des Zentrums des Luftstrahles hängt, erfolgt die Umströmung nicht symmetrisch. Es wird mehr Luft nach unten abgelenkt, da an der Unterseite des Balles die Strömungsgeschwindigkeit und der Strahlquerschnitt gegenüber der Oberseite geringer sind. Als Reaktion erfährt der Ball eine Kraft nach oben. Dies erfolgt in Überlagerung mit dem Magnus-Effekt (der Ball dreht sich). Beide Effekte, jeder für sich, lassen den Ball nicht nach unten fallen, sondern nur an der Unterseite des Luftstrahles entlang"rutschen". Der Widerstand, den der Ball der Strömung entgegensetzt, hält ihn auf Distanz zur Düse und die Schwerkraft verhindert, dass er einfach weggeblasen wird. So kann der Ball in einer mehr oder weniger stabilen Position schweben.

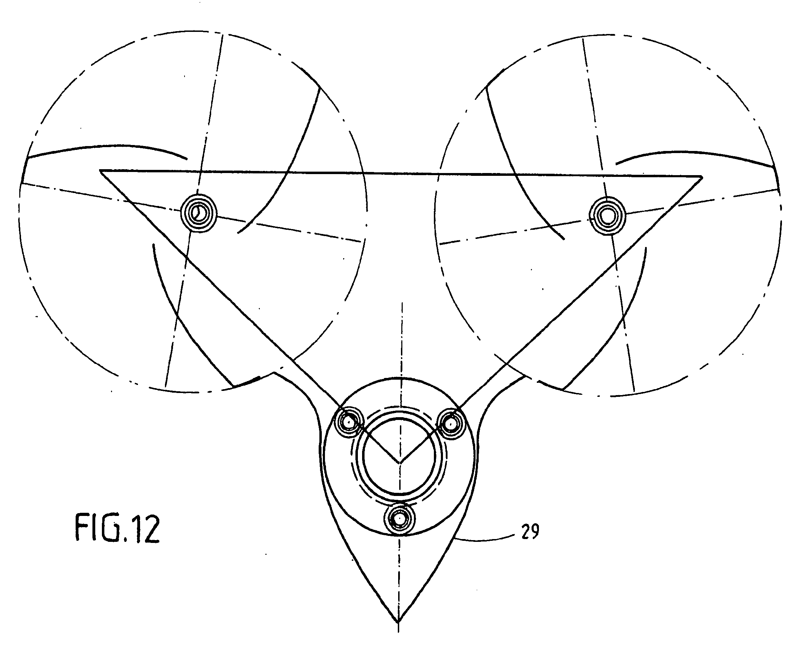

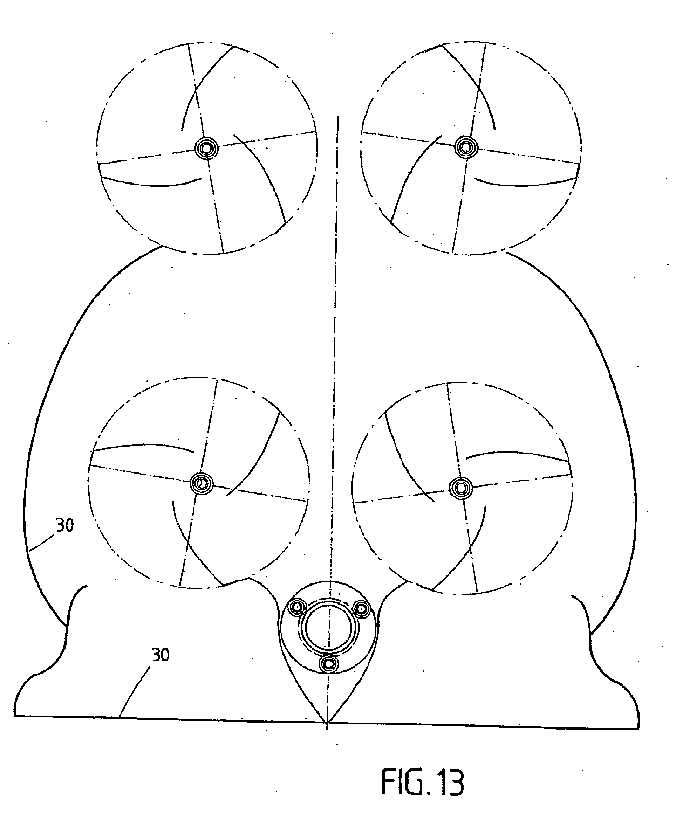

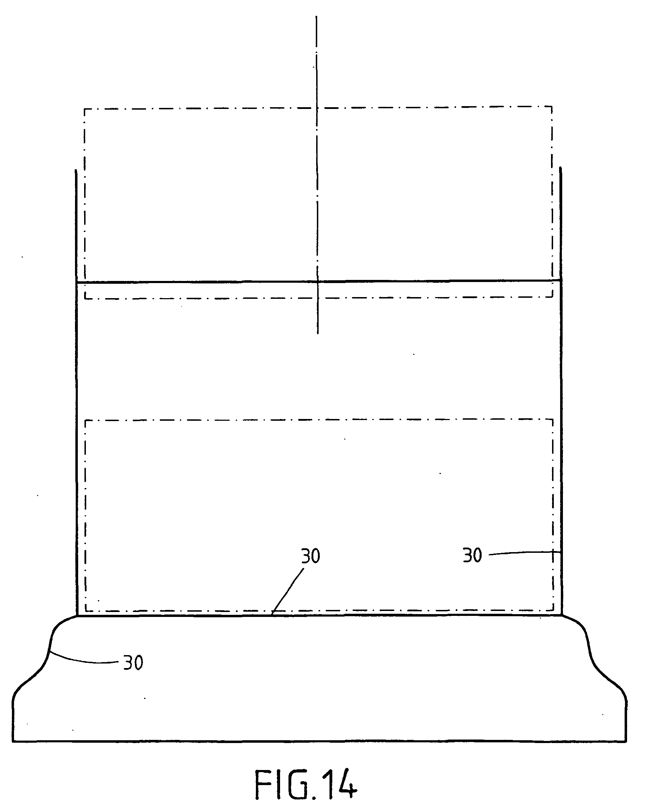

Die Figuren 12 bis 14 zeigen weitere Varianten mit geänderten Windverteilern 29 und zusätzlichen Konzentrationsblechen 30.

Auswertung statischer und dynamischer Drehmomentmessungen an der erfindungsgemäßen Windturbine mit Durchmesser 1 m und Länge 1 m in Moers

In die Auswertung wurden folgende Daten direkt bzw. indirekt mit einbezogen:

- Statische Drehmomentmessungen (Stillstandsdrehmoment) vom 24.-26.9.2010
- Dynamische Drehmomentmessungen in der Zeit vom 4. - 8.11.2010

Bei den dynamischen Messungen wurde jeweils noch eine Wirbelstrombremse eingesetzt, mit der verschiedene Bremskräfte durch Variation des Spulenstromes eingestellt werden können.

Die Messwerte wurden auf Plausibilität geprüft und mittels diverser Mittelungs- und Filterverfahren ausgewertet.

In der nachfolgenden Tabelle sind die Ergebnisdaten für Windgeschwindigkeiten zwischen 2 und 8 m/s zusammengestellt.

*Tabelle:* Ergebnisdaten zur Auswertung statischer und dynamischer Drehmomentmessungen (Sept./Nov. 2010) an der erfindungsgemäßen Windturbine mit Durchmesser 1 m und Länge 1 m in Moers

| Windgeschw. [m/s] | Drehzahl [U/min] | Drehmoment [Nm] | mechanische Leistung[W] *(daraus berechnet)* |
|---|---|---|---|
| 2 | 0 | 0,45 | 0,0 |
| 2 | 17 | 0,90 | 1,6 |
| 2 | 20 | 0,69 | 1,4 |
| 2 | 55 | 0,16 | 0,9 |
| 2 | 78 | 0,00 | 0,0 |
| 3 | 0 | 0,90 | 0,0 |
| 3 | 27 | 1,85 | 5,2 |
| 3 | 35 | 1,48 | 5,4 |
| 3 | 35 | 1,40 | 5,1 |
| 3 | 40 | 1,27 | 5,3 |
| 3 | 42 | 0,93 | 4,1 |
| 3 | 50 | 0,87 | 4,6 |
| 3 | 55 | 0,52 | 3,0 |
| 3 | 60 | 0,70 | 4,4 |
| 3 | 80 | 0,21 | 1,8 |
| 3 | 105 | 0,00 | 0,0 |
| 3 | 107 | 0,00 | 0,0 |
| 3 | 115 | 0,00 | 0,0 |
| 4 | 0 | 1,45 | 0,0 |
| 4 | 50 | 2,45 | 12,8 |

(fortgesetzt)

| Windgeschw. [m/s] | Drehzahl [U/min] | Drehmoment [Nm] | mechanische Leistung[W] *(daraus berechnet)* |
|---|---|---|---|
| 4 | 55 | 2,15 | 12,4 |
| 4 | 57 | 1,90 | 11,3 |
| 4 | 60 | 1,80 | 11,3 |
| 4 | 65 | 1,55 | 10,6 |
| 4 | 69 | 1,25 | 9,0 |
| 4 | 80 | 0,82 | 6,9 |
| 4 | 80 | 1,12 | 9,4 |
| 4 | 95 | 0,64 | 6,4 |
| 4 | 107 | 0,28 | 3,1 |
| 4 | 137 | 0,00 | 0,0 |
| 4 | 139 | 0,00 | 0,0 |
| 4 | 145 | 0,00 | 0,0 |
| 5 | 0 | 2,00 | 0,0 |
| 5 | 75 | 3,00 | 23,6 |
| 5 | 78 | 3,30 | 27,0 |
| 5 | 85 | 2,80 | 24,9 |
| 5 | 85 | 2,23 | 19,8 |
| 5 | 85 | 1,85 | 16,5 |
| 5 | 93 | 1,42 | 13,8 |
| 5 | 110 | 1,35 | 15,6 |
| 5 | 120 | 0,31 | 3,9 |
| 5 | 120 | 0,98 | 12,3 |
| 5 | 127 | 0,71 | 9,4 |
| 5 | 165 | 0,00 | 0,0 |
| 5 | 174 | 0,00 | 0,0 |
| 5 | 177 | 0,00 | 0,0 |
| 6 | 0 | 2,70 | 0,0 |
| 6 | 100 | 3,65 | 38,2 |
| 6 | 113 | 2,70 | 31,9 |
| 6 | 115 | 3,35 | 40,3 |
| 6 | 116 | 2,15 | 26,1 |
| 6 | 120 | 1,81 | 22,7 |
| 6 | 140 | 1,53 | 22,4 |
| 6 | 152 | 0,34 | 5,4 |
| 6 | 160 | 0,75 | 12,6 |
| 6 | 195 | 0,00 | 0,0 |
| 6 | 209 | 0,00 | 0,0 |

(fortgesetzt)

| Windgeschw. [m/s] | Drehzahl [U/min] | Drehmoment [Nm] | mechanische Leistung[W] *(daraus berechnet)* |
|---|---|---|---|
| 6 | 210 | 0,00 | 0,0 |
| 7 | 0 | 3,50 | 0,0 |
| 7 | 130 | 4,30 | 58,5 |
| 7 | 147 | 3,27 | 50,3 |
| 7 | 160 | 1,65 | 27,6 |
| 7 | 175 | 0,79 | 14,5 |
| 7 | 225 | 0,00 | 0,0 |
| 7 | 245 | 0,00 | 0,0 |
| 8 | 0 | 4,25 | 0,0 |
| 8 | 162 | 4,85 | 82,3 |
| 8 | 190 | 3,75 | 74,6 |
| 8 | 210 | 0,84 | 18,5 |
| 8 | 250 | 0,00 | 0,0 |
| 8 | 275 | 0,00 | 0,0 |

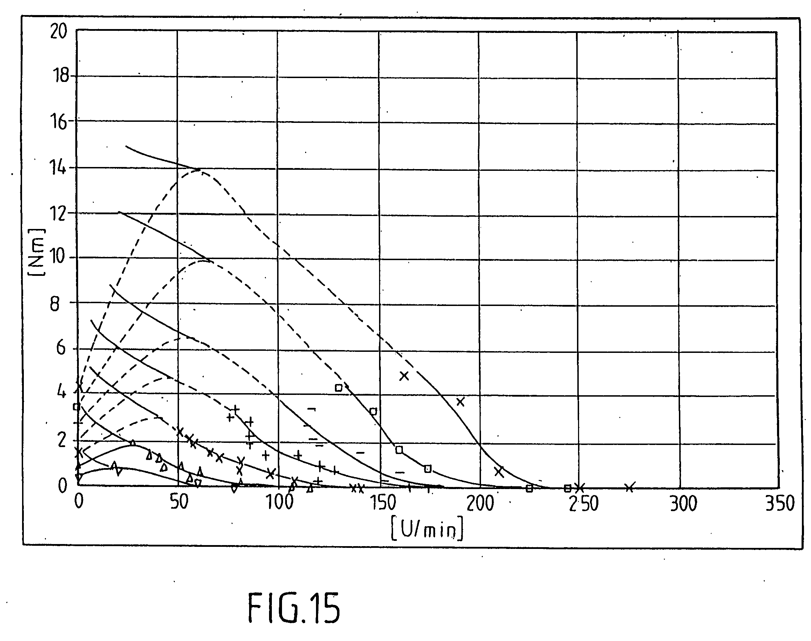

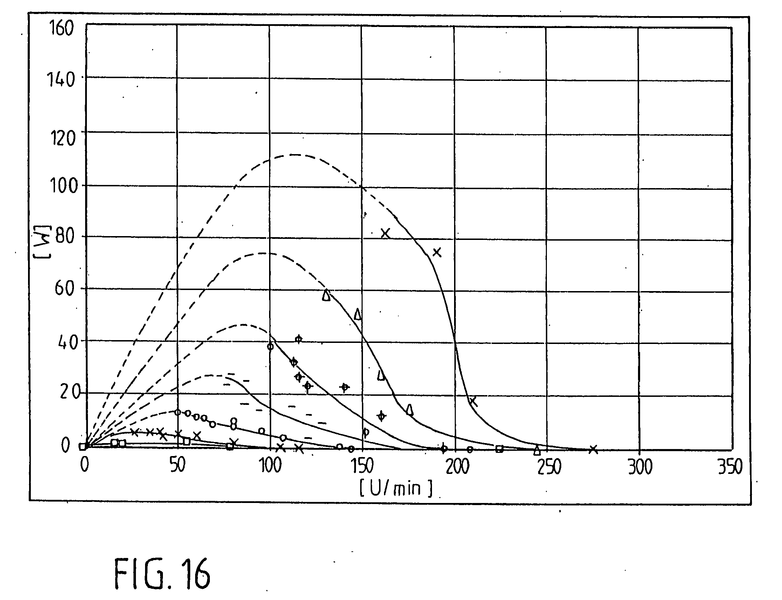

Die Figuren 15 und 16 zeigen die graphische Darstellung mit entsprechend interpolierten Linien.

Figur 15: DM-DZ-Kennlinien, Interpolation mit mittleren PowerCoeffizient (PC) 35 %

Drehmoment [NM] vs. Drehzahl [U/min]; Parameter Windgeschwindigkeit [m/s]

Es bedeuten

♦ 2 m/s Messung

▲ m/s Messung

X 4 m/s Messung

+ 5 m/s Messung

- 6 m/s aus Messung

■ 7 m/s aus Messung

× 8 m/s aus Messung

------- max. DM

- - - - mittl. DM

Figur 16: Kennlinien

mech. Leistung

Extrapolation im Max-Powerbereich mit mittleren PC = 35 %

Mechanische Leistung [W] vs. Drehzahl [U/min]; Parameter Windgeschwindigkeit [m/s]

Es bedeuten

■ 2 m/s WSB

× m/s WSB

• 4 m/s WSB

- 5 m/s WSB

♦ 6 m/s aus WSB

▲ 7 m/s aus WSB

X 8 m/s aus WSB

Da die dynamischen Messungen bisher nur mit relativ schwachen Bremskräften durchgeführt wurden, wurde die Interpolation außerhalb des bisher erfassten Messbereichs gestrichelt dargestellt. Dabei wurde angenommen, dass im Max.-Power-Punkt ein Leistungsbeiwert (Power-Coefficient) von 35 % erreicht wird. Anhand der Streuung der Ergebnisdaten kann der Leistungsbeiwert (Power-Coefficient) vorbehaltlich eines ausreichend genauen Kalibriernachweises für die verwendete Messtechnik grob mit ca. 30 ... 40% beziffert werden. Andernfalls sind die systematischen Fehler der Messtechnik zusätzlich zu berücksichtigen. Der Leistungsbeiwert (Power-Coefficient) kann genauer bestimmt werden, wenn weitere Messungen bei höheren Bremskräften berücksichtigt werden.

Das erfindungsgemäße Turbinensystem lässt sich mit Vorteil auch im Wasser zur Energiegewinnung aus der Wasserströmung, also als "Marine-Turbinensystem" einsetzen.

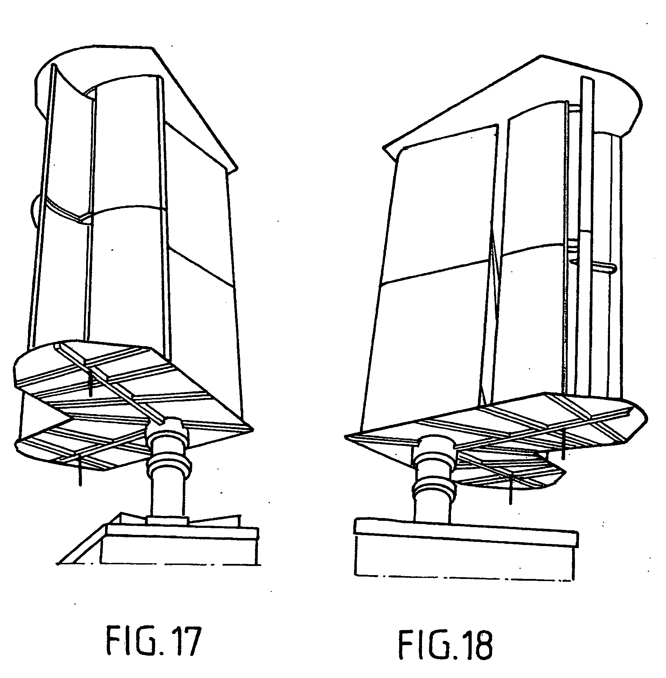

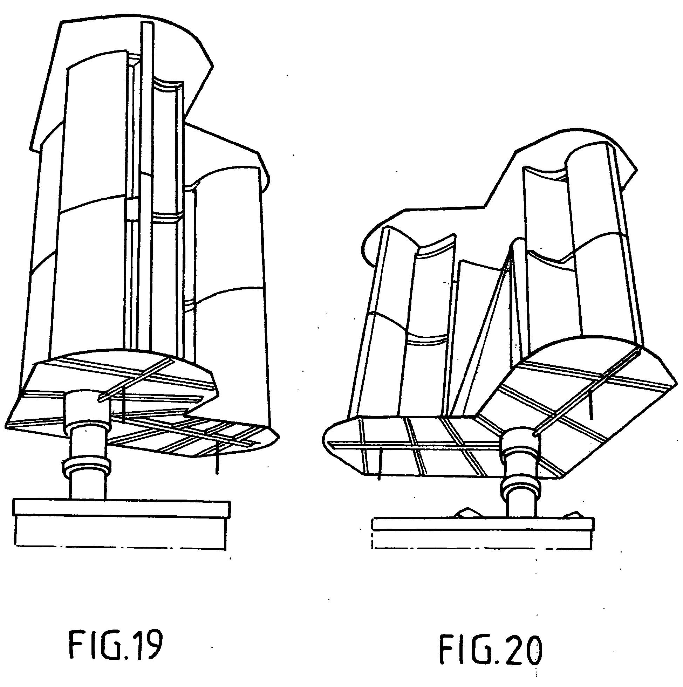

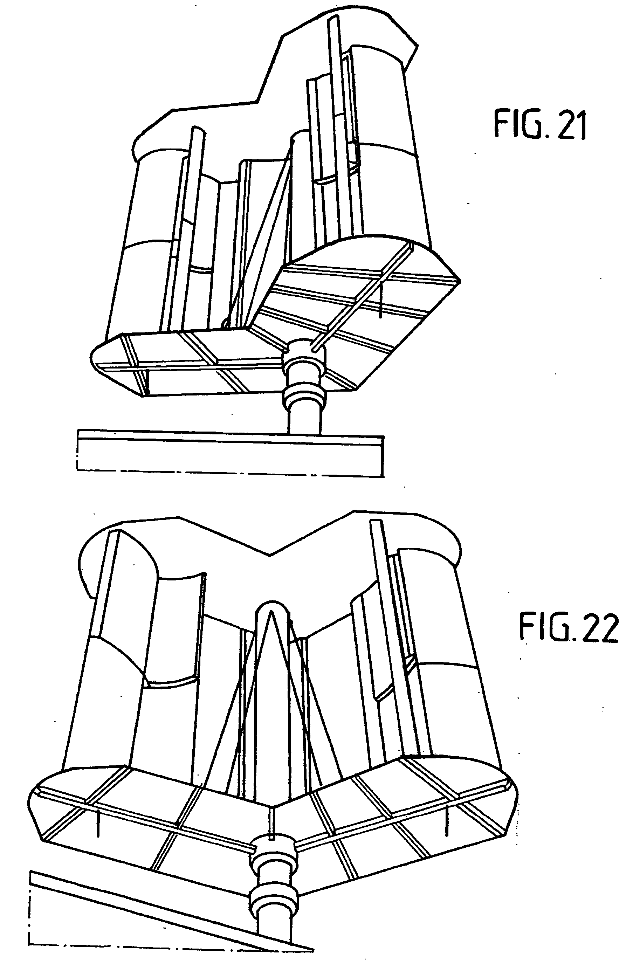

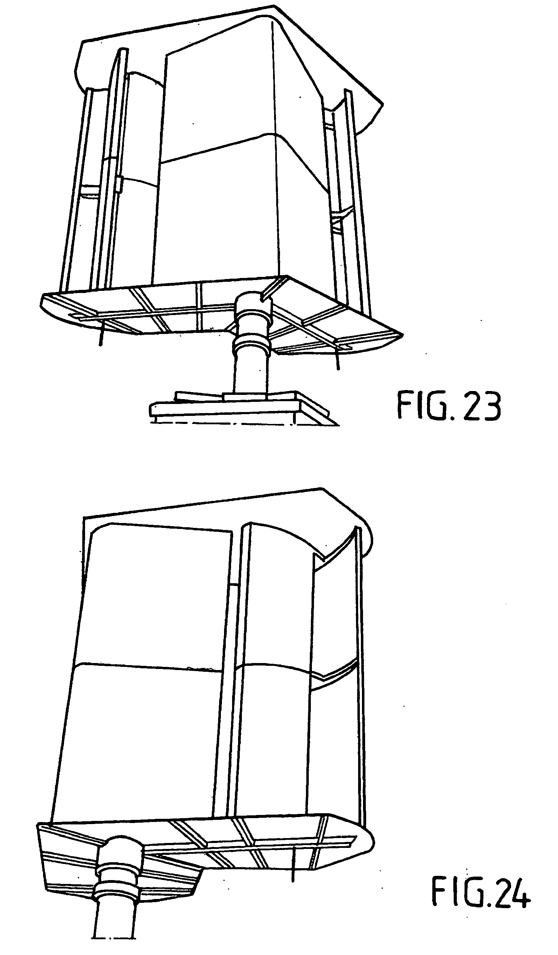

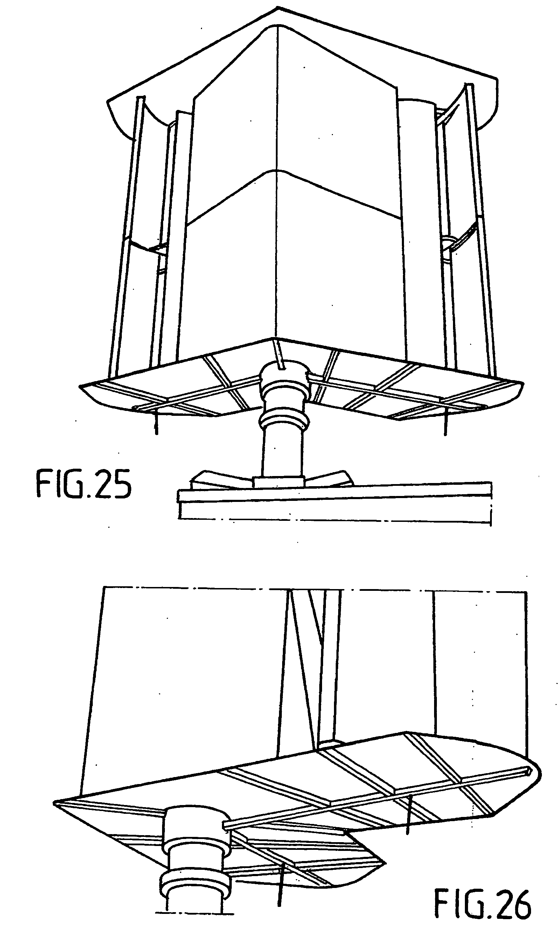

Die Figuren 17 bis 26 zeigen eine weiter verbesserte erfindungsgemäße Windkraftanlage in verschiedenen perspektivischen Ansichten. Der praktische Betrieb hat gezeigt, dass die Windkraftanlage praktisch geräuschlos und sehr vibrationsarm arbeitet. Etwaige Druckschwingungen liegen im unhörbaren Bereich unterhalb von 20 Hz. Der leichte und gut gewuchtete Aufbau der rotierenden Teile sorgt für die beobachtete Vibrationsarmut. Dadurch ist diese Windkraftanlage hervorragend im urbanen Bereich an und/oder auf Gebäuden einsetzbar.

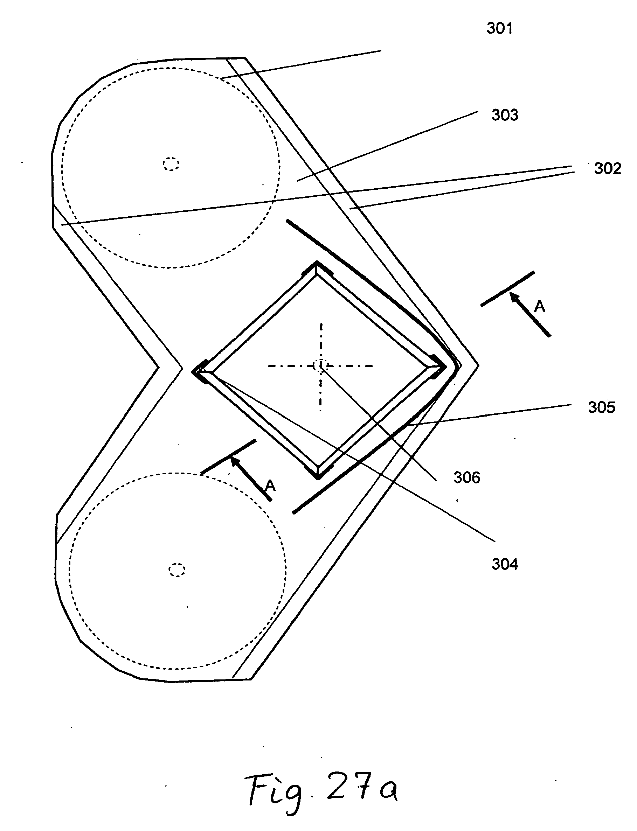

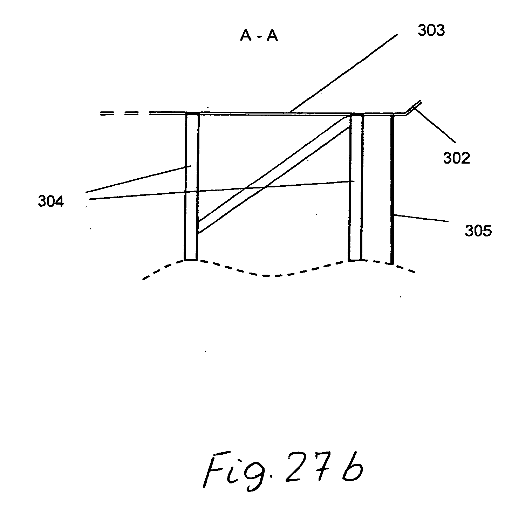

In einem weiteren Ausführungsbeispiel wird oberhalb der Drehverbindung, die auf einem feststehenden Mast befestigt ist, eine Gittermastkonstruktion vorgesehen, die als Gerüst für das spezielle Akkumulatoren- und Turbinen-Aufhängungssystem genutzt wird und/oder werden kann (vgl. Fig. 27a und Schnitt A-A als Figur 27b). Der Hohlraum innerhalb des Gittermastes bietet genügend Platz für die sichere Aufstellung/Befestigung von Akkumulatoren und der Ladesteuerung; gleichzeitig können die Kabellängen zum Generator kurz gehalten werden, um Ohm'sche Verluste gering zu halten.

Da der Turm im unteren Bereich unterhalb der Drehverbindung aus Stahlrohr hergestellt ist, bildet er einen Hohlraum, der dazu genutzt werden kann, hochsensible Technik sicher zu installieren, da auch eine Belüftung und/oder Heizung und/oder geeignete Klimatisierung (air conditioning), besonders bezüglich der Luftfeuchtigkeit, vorgesehen sein kann.

Das Fundament kann in seiner Ausführung als weiterer Energiespeicher oder als Wasserreservoir oder als Ölspeicher genutzt und als solcher konzipiert werden. Im Fundament können Wärmepumpen (heat pumps with heat pipes) integriert werden.

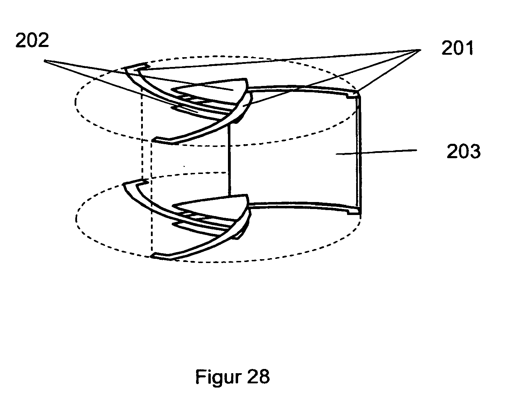

In dieser Erfindung sind die Turbinenflügel/Turbinenschaufeln (air foils) auf mehrere gewalzte Tragarme montiert, welche wiederum beidseitig durch zwei gegeneinander verschraubte "Stützherzen" mit einem Drehteil auf der Welle befestigt sind. Dies reduziert das Gewicht und lässt die Turbine schneller auf Geschwindigkeit kommen (vgl. Fig. 28).

Außerdem dienen die Stützherzen dazu, die Turbinenflügel einzeln durch Verschraubung austauschen zu können. Die bei der Savonius-Turbine üblichen befestigten mitrotierenden, sehr schweren Kreisscheiben werden ersetzt durch feststehende Abschlussbleche, die zusätzlich zur besseren Windeinleitung abgekantet sind. Dadurch wird das Gewicht der rotierenden Teile erheblich reduziert und die Verluste durch den Thom-Effekt erheblich minimiert. So kann die Windenergie mit hohem Wirkungsgrad geerntet werden.

Die erfindungsgemäß eingesetzten Stützherzen sind erheblich leichter. Die Abschlussbleche werden zusammen gehalten durch einen Mast, der die schwere Rahmenkonstruktion, die üblich ist bei der Savonius-Turbine, funktional ersetzt.

Vorteilhaft ist die Zusammenführung von mehreren Windtrackern zu einem dezentralen netzkommunikativen Energieversorgungssystem und anderen Anwendungen. Daher wird vorgeschlagen, dass eine Anordnung der erfindungsgemäßen Turbinensysteme und/oder der Windtracker entlang der Verkehrs-Infrastruktur wie Straßen, Autobahnen, Eisenbahnlinien, Kanälen vorgesehen ist, die zusätzlich der Telekommunikation und/oder der Zwischenspeicherung von Strom aus dem Netz in Zeiten schwacher Stromabnahme und/oder der Nutzung als Werbeträger und/oder als Straßenbeleuchtung und/oder zur Bereitstellung von Sicherheitsräumen dient.

Bezugszeichenliste

| | |
|---|---|
| 1 | Radialturbine |
| 2 | Radialturbine |
| 3 | Windverteiler |
| 5 | Stahlmast |
| 6 | Fundamentplatte |
| 7 | Trägerplatte |
| 8 | Trägerplatte |
| 9 | Trägerplatte |
| 10 | (Dreh-)Lager |
| 11 | (Dreh-)Lager |
| 12 | (Dreh-)Lager |
| 13 | (Dreh-)Lager |

14      (Dreh-)Lager
15      Längsachse
16      Turbinen-Lager
17      Turbinen-Lager
18      Turbinenachse
19      Turbinen-Lager
20      Turbinen-Lager
21      Turbinen-Lager
22      Turbinen-Lager
23      Distanzkragen
24      Distanzkragen
25      Turbinenschaufeln
26      oberer Kragenflansch
27      Führungsflansch
28      Wind
29      geänderte Leitfläche
30      Konzentrationsblech bzw. Konzentrationsfläche
31      Magnus-Effekt
32      Coanda-Effekt
33      Magnus-Coanda-Überlagerung
34      High Lift
35      Unterdruck
36      Überdruck
37      Fadenrichtung riss ab

110     obere Kurve
111     Kurve
112     Kurve
113     Kurve

201     gewalzte Tragarme
202     Stützherzen
203     Turbinenflügel

301     Außenradius der Turbine bzw. der Turbinenflügel
302     Abkantung des Konzentrations- und/oder Windführungsbleches
303     Konzentrations- und/oder Windführungsblech
304     Gittermast
305     V-förmiger Windverteiler

**Patentansprüche**

1.  Turbinensystem für Wind- und/oder Wasserkraft mit zwei Radialturbinen (1,2),
    wobei jede Radialturbine (1, 2) einen um eine Achse (18) drehbaren Rotor aufweist, welcher einen oder mehrere Turbinenflügel (25, 203) umfasst, wobei die Turbinenflügel (25, 203) parallel zum Rotor ausgerichtet sind, wobei die Turbinenflügel (25, 203) innerhalb einer konzentrisch um die Achse (18) angeordneten Zylinderschale mit einem äußeren Radius R1 und einem inneren Radius R2 angeordnet sind,
    wobei jeder Turbinenflügel (25, 203) einen ersten vom inneren Radius R2 bis zum äußeren Radius R1 sich erstreckenden, zur Achse (18) hin gekrümmten Bereich mit einem Krümmungsradius R3 aufweist, und
    wobei jeder Turbinenflügel (25, 203) einen, sich außen an den ersten Bereich anschließenden zweiten Bereich umfasst, der auf der Außenseite der Zylinderschale liegt, eine Breite B2 und eine Krümmung zur Achse (18) hin aufweist, wobei die Krümmung zur gleichen Seite wie die Krümmung des ersten Bereichs zeigt und einen Krümmungsradius R4 aufweist,
    **dadurch gekennzeichnet,**

        • **dass** der innere Radius

$$R2 = f1 \times R1$$

mit f1 = 0,19 bis 0,32 beträgt,

- **dass** der Krümmungsradius

$$R3 = f2 \times R1$$

mit f2 = 1,2 bis 2,4 und

- **dass** der Krümmungsradius R4 des zweiten Bereichs

$$R4 = f3 \times R1$$

mit f3 > 0,7 beträgt,

- **dass** der zweite Bereich eine Breite

$$B2 = f8 \times R1$$

mit f8 = 0,11 bis 0,19 hat, und

- **dass** zwei nebeneinander und parallel ausgerichtete Radialturbinen (1,2) mit einer vertikalen Rotationsachse (18) angeordnet sind, die miteinander verbunden und um eine Schwenkachse (15) parallel zu den Turbinenachsen (18) verschwenkbar sind, wobei die Schwenkachse (15) und ein V-förmiger Windverteiler (3) außerhalb der Verbindungslinie der Turbinenachsen (18) und beide auf der gleichen Seite der Verbindungslinie liegen,
- **dass** die Radialturbinen (1, 2) am oberen und unteren Ende feststehende Abschlussbleche (303) aufweisen und
- **dass** die Turbinenflügel (25, 203) auf Tragarme (201) montiert sind, welche wiederum auf der Achse (18) befestigt sind.

2.  Turbinensystem nach Anspruch 1,
    **dadurch gekennzeichnet,**
    **dass** die Tragarme (201) beidseitig durch zwei gegeneinander verschraubte Stützherzen (202) mit einem Drehteil auf der Achse (18) befestigt sind.

3.  Turbinensystem nach Anspruch 2,
    **dadurch gekennzeichnet,**
    **dass** die Turbinenflügel (25, 203) einzeln austauschbar sind.

4.  Turbinensystem nach Anspruch 1,
    **dadurch gekennzeichnet,**
    **dass** die Abschlussbleche (303) im Vorderbereich abgekantet sind.

5.  Turbinensystem nach Anspruch 1,
    **dadurch gekennzeichnet,**

- **dass** außerhalb der Zylinderschale der parallel zum Rotor ausgerichtete Windverteiler (3, 305) angeordnet ist, welcher eine Breite

$$B3 = f9 \times R1$$

mit $f_9$ = 0,7 bis 2,5 hat,

• wobei die der Turbinenachse (18) zugewandte Kante (P3) des Windverteilers (3, 305) einen Abstand A2

$$A2 = f_6 \times R1$$

mit $f_6$ = 0,25 bis 0,55, zu einer ersten Längsschnittebene durch die Turbinenachse (18)
• und einen Abstand A1

$$A1 = f_5 \times R1$$

mit $f_5$ = 1,00 bis 1,10, zu einer zweiten Längsschnittebene durch die Turbinenachse (18) hat, wobei die zweite Längsschnittebene senkrecht auf der ersten Längsschnittebene steht,
• und **dass** der Windverteiler (3, 305) einen Anstellwinkel

$$\alpha = 40° \text{ bis } 60°$$

bezüglich der ersten Längsschnittebene hat.

6. Turbinensystem nach Anspruch 1,
   **dadurch gekennzeichnet,**
   **dass** die Gesamtbreite B1 des Turbinenflügels (25, 203)

$$B1 = f_7 \times R1$$

mit $f_7$ = 0,9 bis 1,1 beträgt.

7. Turbinensystem nach Anspruch 1,
   **dadurch gekennzeichnet,**
   **dass** die Knickkante zwischen dem ersten und dem zweiten Bereich des Turbinenflügels (25, 203) einen Krümmungsradius

$$R5 = f_4 \times R1$$

mit $f_4$ = 0,01 bis 0,08 hat.

8. Turbinensystem nach Anspruch 1,
   **dadurch gekennzeichnet,**
   **dass** die Turbinenachse (18) als Welle mit einem Durchmesser

$$D1 = f_{10} \times R1$$

mit $f_{10}$ = 0,03 bis 0,13 ausgebildet ist.

9. Turbinensystem nach Anspruch 1,
   **dadurch gekennzeichnet,**
   **dass** die beiden Turbinen (1, 2) in gegenläufiger Richtung rotieren.

10. Turbinensystem nach Anspruch 1,
    **dadurch gekennzeichnet,**
    **dass** ein Ringgenerator zur Stromerzeugung vorgesehen ist.

11. Wind- und/oder Wasserkraftanlage nach Anspruch 1,
    **dadurch gekennzeichnet,**

dass der Generator zum Einstellen der optimalen Schnelllaufzahl der Turbine (1, 2) steuerbar ist.

12. Turbinensystem nach Anspruch 1,
dadurch gekennzeichnet,
dass das Turbinensystem über eine Drehverbindung (10, 11, 12, 13, 14) an einem Mast (5), Ponton, Fundament, Gebäudedach oder dergleichen befestigt ist.

13. Turbinensystem nach Anspruch 1,
dadurch gekennzeichnet,
dass mehrere dieser Turbinensysteme an einem Mast (5) übereinander und/oder nebeneinander montiert sind.

14. Turbinensystem nach Anspruch 1,
dadurch gekenntzeichnet,
dass sich das Turbinensystem selbstständig ohne motorgetriebene Nachführeinrichtung und ohne Steuerung und ohne zusätzliche Windverteiler in die optimale Wind- oder Wasser-Strömungsrichtung dreht.

15. Turbinensystem nach Anspruch 1,
dadurch gekennzeichnet,
dass der Abstand des V-förmigen Windverteilers (3) zu den Turbinen (1, 2) verstellbar ist.

16. Turbinensystem nach Anspruch 1,
dadurch gekennzeichnet,
dass der untere Bereich des Mastes (5) und/oder der Windverteiler (3) als Werbefläche oder Werbeträger ausgebildet ist.

17. Turbinensystem nach Anspruch 1,
dadurch gekennzeichnet,
dass die Schwenkachse (15) eine Drehverbindung (10, 11, 12, 13, 14) aufweist und oberhalb der Drehverbindung (10, 11, 12, 13, 14) ein Gittermast vorgesehen ist, an dem ein Akkumulatorsystem und/oder ein Turbinen-Tragesystem befestigbar ist.

18. Turbinensystem nach Anspruch 1,
dadurch gekennzeichnet,
dass eine Einrichtung zum selbsttätigen Annähern der Radialturbinen (1,2) beim Erreichen einer vorgegebenen Windgeschwindigkeit vorgesehen ist.

19. Turbinensystem nach Anspruch 1,
dadurch gekennzeichnet,
dass die Radialturbinen (1, 2) in mehrere längs einer Welle einzeln gelagerte Einzelturbinen aufgeteilt sind.

20. Turbinensystem nach Anspruch 17,
dadurch gekennzeichnet,
dass unterhalb der Drehverbindung (10, 11, 12, 13, 14) ein geschützter und geerdeter Sicherheitsraum zur Aufnahme sensibler technologischer Komponenten vorgesehen ist, wobei der Sicherheitsraum vorzugsweise eine Belüftung und/oder Heizung und/oder geeignete Klimatisierung (air conditioning), besonders bezüglich der Luftfeuchtigkeit, aufweist.

21. Turbinensystem nach Anspruch 12,
dadurch gekennzeichnet,
dass das Fundament als weiterer Energiespeicher oder als Wasserreservoir oder als Ölspeicher nutzbar ist.

22. Turbinensystem nach Anspruch 12,
dadurch gekennzeichnet,
dass im Fundament Wärmepumpen integriert sind.

23. Turbinensystem nach Anspruch 1,
dadurch gekennzeichnet,
dass LED-Elemente an den Turbinenflügeln (25, 203) angebracht sind und in Abhängigkeit von der Rotation ansteuerbar sind, um Werbeeffekte zu erzielen.

24. Turbinensystem nach Anspruch 12,
**dadurch gekennzeichnet,**
**dass** ein Gittermast einschließlich Turbinenhalterung (7, 8, 9) und der Turbinen (1, 2) mit einer Drehverbindung (10, 11, 12, 13, 14) des Mastes befestigt ist.

25. Turbinensystem nach Anspruch 1,
**dadurch gekennzeichnet,**
**dass** eine Anordnung der erfindungsgemäßen Turbinensysteme entlang der Verkehrs-Infrastruktur wie Straßen, Autobahnen, Eisenbahnlinien, Kanälen vorgesehen ist, die zusätzlich der Telekommunikation und/oder der Zwischenspeicherung von Strom aus dem Netz in Zeiten schwacher Stromabnahme und/oder der Nutzung als Werbeträger und/oder als Straßenbeleuchtung und/oder zur Bereitstellung von Sicherheitsräumen dient.

**Claims**

1. Turbine system for wind and/or water power comprising two radial turbines (1, 2), each radial turbine (1, 2) comprising a rotor which can be rotated about a shaft (18) and comprises one or more turbine blades (25, 203), the turbine blades (25, 203) being aligned in parallel with the rotor, the turbine blades (25, 203) being arranged inside a cylindrical shell that is arranged concentrically about the shaft (18) and has an external radius R1 and an internal radius R2, each turbine blade (25, 203) having a first region that extends from the internal radius R2 to the external radius R1, is curved towards the shaft (18), and has a radius of curvature R3, and
each turbine blade (25, 203) having a second region that is connected externally to the first region, is located on the outer face of the cylindrical shell, has a width B2 and has a curvature towards the shaft (18), the curvature pointing towards the same side as the curvature of the first region and having a radius of curvature R4,
**characterised in that**

• the internal radius is

$$R2 = f1 \times R1,$$

in which f1 = 0.19 to 0.32,

• **in that** the radius of curvature is

$$R3 = f2 \times R1,$$

in which f2 = 1.2 to 2.4, and
• **in that** the radius of curvature R4 of the second region is

$$R4 = f3 \times R1,$$

in which f3 > 0.7,
• **in that** the second region has a width of

$$B2 = f8 \times R1,$$

in which f8 = 0.11 to 0.19, and
• **in that** two radial turbines (1, 2) that are aligned next to one another and in parallel are arranged having a vertical rotational shaft (18), are interconnected, and can be pivoted about a pivot shaft (15) in parallel with the turbine shafts (18), the pivot shaft (15) and a V-shaped wind splitter (3) are located outside the connecting line of the turbine shafts (18) and are both on the same side of the connecting line,

• **in that** the radial turbines (1, 2) comprise stationary endplates (303) at the top and bottom ends, and
• **in that** the turbine blades (25, 203) are mounted on brackets (201) that are in turn fixed to the shaft (18).

2. Turbine system according to claim 1,
   **characterised in that**
   the brackets (201) are fixed on both sides to a rotating part on the shaft (18) by two support cores (202) that are screwed together against one another.

3. Turbine system according to claim 2,
   **characterised in that**
   the turbine blades (25, 203) can be replaced individually.

4. Turbine system according to claim 1
   **characterised in that**
   the endplates (303) are chamfered in the front region.

5. Turbine system according to claim 1,
   **characterised in that**

   • the wind splitter (3, 305), which is aligned in parallel with the rotor, is arranged outside the cylindrical shell, said wind splitter having a width of

$$B3 = f_9 \text{ x } R1,$$

   in which $f_9$ = 0.7 to 2.5,

   • the edge (P3) of the wind splitter (3, 305) facing the turbine shaft (18) having a spacing A2

$$A2 = f_6 \times R1,$$

   in which $f_6$ = 0.25 to 0.55, from a first longitudinal section plane through the turbine shaft (18),
   • and a spacing A1

$$A1 = f_5 \text{ x } R1,$$

   in which $f_5$ = 1.00 to 1.10, from a second longitudinal section plane through the turbine shaft (18), the second longitudinal section plane being perpendicular to the first longitudinal section plane,

   • and **in that** the wind splitter (3, 305) has an adjustment angle

   $\alpha$ = 40° to 60°

   with respect to the first longitudinal section plane.

6. Turbine system according to claim 1,
   **characterised in that**
   the overall width B1 of the turbine blade (25, 203) is

$$B1 = f_7 \times R1,$$

   in which $f_7$ = 0.9 to 1.1.

7. Turbine system according to claim 1,

**characterised in that**
the kinked edge between the first and the second region of the turbine blade (25, 203) has a radius of curvature

$$R5 = f_4 \times R1,$$

in which $f_4$ = 0.01 to 0.08.

8.  Turbine system according to claim 1,
    **characterised in that**
    the turbine shaft (18) is in the form of a shaft having a diameter

$$D1 = f_{10} \times R1,$$

in which $f_{10}$ = 0.03 to 0.13.

9.  Turbine system according to claim 1,
    **characterised in that**
    the two turbines (1, 2) rotate in opposite directions.

10. Turbine system according to claim 1,
    **characterised in that**
    a ring generator is provided for generating current.

11. Wind and/or water generator according to claim 1,
    **characterised in that**
    the generator can be controlled in order to set the optimum tip speed ratio of the turbine (1, 2).

12. Turbine system according to claim 1,
    **characterised in that**
    the turbine system is fixed to a mast (5), pontoon, foundation, building roof or the like by means of a rotary connection (10, 11, 12, 13, 14).

13. Turbine system according to claim 1,
    **characterised in that**
    a plurality of these turbine systems are mounted above one another and/or side by side on a mast (5).

14. Turbine system according to claim 1,
    **characterised in that**
    the turbine system rotates autonomously without motor-driven tracking means and without control means and without additional wind splitters in the optimal wind or water flow direction.

15. Turbine system according to claim 1,
    **characterised in that**
    the spacing between the V-shaped wind splitter (3) and the turbines (1, 2) is adjustable.

16. Turbine system according to claim 1,
    **characterised in that**
    the lower region of the mast (5) and/or the wind splitter (3) is in the form of advertising space or advertising media.

17. Turbine system according to claim 1,
    **characterised in that**
    the pivot shaft (15) has a rotary connection (10, 11, 12, 13, 14), and a lattice mast is provided above the rotary connection (10, 11, 12, 13, 14), to which mast an accumulator system and/or a turbine carrying system can be fixed.

18. Turbine system according to claim 1

**characterised in that**
a device is provided for automatically bringing the radial turbines (1, 2) closer together when a predetermined wind speed is reached.

**19.** Turbine system according to claim 1,
**characterised in that**
the radial turbines (1, 2) are divided into a plurality of individual turbines mounted individually along a shaft.

**20.** Turbine system according to claim 17,
**characterised in that**
a protected and earthed safety space for receiving sensitive technological components is provided below the rotary connection (10, 11, 12, 13, 14), the safety space preferably comprising a ventilation means and/or heating means and or appropriate air conditioning means, in particular in respect of the humidity.

**21.** Turbine system according to claim 12,
**characterised in that**
the foundation can be used as additional energy accumulator or as a water reservoir or as an oil reservoir.

**22.** Turbine system according to claim 12,
**characterised in that**
heat pumps are integrated in the foundation.

**23.** Turbine system according to claim 1,
**characterised in that**
LED elements are installed on the turbine blades (25, 203) and can be actuated on the basis of the rotation in order to achieve advertising effects.

**24.** Turbine system according to claim 12,
**characterised in that**
a lattice mast, including turbine holders (7, 8, 9) and the turbines (1, 2), is fixed to a rotary connection (10, 11, 12, 13, 14) of the mast.

**25.** Turbine system according to claim 1,
**characterised in that**
an arrangement of the turbine systems according to the invention is provided along the transport infrastructure, such as roads, motorways, railway lines, canals, and is additionally used for telecommunications and/or for temporarily storing current from the grid in times of low current uptake and/or as an advertising medium and/or for street lighting and/or for providing safety spaces.

**Revendications**

**1.** Système de turbines pour une énergie éolienne et/ou hydraulique avec deux turbines radiales (1, 2),
dans lequel chaque turbine radiale (1, 2) présente un rotor, pouvant tourner autour d'un axe (18), qui comprend une ou plusieurs pales de turbine (25, 203), dans lequel les pales de turbine (25, 203) sont orientées parallèlement au rotor, dans lequel les pales de turbine (25, 203) sont disposées à l'intérieur d'une coque cylindrique disposée de façon concentrique autour de l'axe (18), avec un rayon extérieur R1 et un rayon intérieur R2,
dans lequel chaque pale de turbine (25, 203) présente une première zone courbée en direction de l'axe (18), avec un rayon de courbure R3, s'étendant à partir du rayon intérieur R2 jusqu'au rayon extérieur R1, et
dans lequel chaque pale de turbine (25, 203) présente une deuxième zone, se raccordant extérieurement à la première zone, qui est située sur le côté extérieur de la coque cylindrique, présente une largeur B2 et une courbure vers l'axe (18), dans lequel la courbure est dirigée vers le même côté que la courbure de la première zone, et présente un rayon de courbure R4,
**caractérisé en ce que**

• le rayon interne est

$$R2 = f1 \times R1$$

avec f1 = 0,19 à 0,32,

• le rayon de courbure est

$$R3 = f2 \times R1$$

avec f2 = 1,2 à 2,4 et
• le rayon de courbure R4 de la deuxième zone est

$$R4 = f3 \times R1$$

avec f3 > 0,7,
• la deuxième zone a une largeur

$$B2 = f8 \times R1$$

avec f8 = 0,11 à 0,19, et
• deux turbines radiales (1, 2) juxtaposées et orientées parallèlement sont disposées avec un axe de rotation (18) vertical, sont raccordées l'une à l'autre et peuvent pivoter autour d'un axe de pivotement (15) parallèlement aux axes de turbine (18), dans lequel l'axe de pivotement (15) et un répartiteur de vent (3) en forme de V sont situés à l'extérieur de la ligne de raccordement des axes de turbine (18) et tous les deux se trouvent au même côté de la ligne de raccordement,
• les turbines radiales (1, 2) présentent à l'extrémité supérieure et inférieure des tôles de terminaison (303) stationnaires, et
• les pales de turbine (25, 203) sont montées sur des bras de support (201) qui sont eux-mêmes fixés sur l'axe (18).

2. Système de turbines selon la revendication 1,
**caractérisé en ce que**
les bras de support (201) sont fixés des deux côtés par deux noyaux d'appui (202) vissés l'un contre l'autre avec une partie tournante sur l'axe (18).

3. Système de turbines selon la revendication 2,
**caractérisé en ce que**
les pales de turbine (25, 203) peuvent être remplacées individuellement.

4. Système de turbines selon la revendication 1,
**caractérisé en ce que**
les tôles de terminaison (303) sont coudées dans la zone antérieure.

5. Système de turbines selon la revendication 1,
**caractérisé en ce que**

• le répartiteur de vent (3, 305) orienté parallèlement au rotor est disposé à l'extérieur de la coque cylindrique et a une largeur

$$B3 = f_9 \times R1$$

avec $f_9$ = 0,7 à 2,5,

• l'arête (P3) du répartiteur de vent (3, 305) tournée vers l'axe de turbine (18) a une distance A2

$$A2 = f_6 \times R1$$

avec $f_6$ = 0,25 à 0,55 par rapport à un premier plan de coupe longitudinal à travers l'axe de turbine (18)

• et une distance A1

$$A1 = f_5 \times R1$$

avec $f_5$ = 1,00 à 1,10 par rapport à un deuxième plan de coupe longitudinal à travers l'axe de turbine (18), dans lequel le deuxième plan de coupe longitudinal est perpendiculaire au premier plan de coupe longitudinal,

• et le répartiteur de vent (3, 305) a un angle d'attaque

$$\alpha = 40° \text{ à } 60°$$

par rapport au premier plan de coupe longitudinal.

6. Système de turbines selon la revendication 1,
**caractérisé en ce que**
la largeur totale B1 de la pale de turbine (25, 203)

$$B1 = f_7 \times R1$$

avec $f_7$ = 0,9 à 1,1.

7. Système de turbines selon la revendication 1,
**caractérisé en ce que**
l'arête d'inflexion entre la première et la deuxième zone de la pale de turbine (25, 203) a un rayon de courbure

$$R5 = f_4 \times R1$$

avec $f_4$ = 0,01 à 0,08.

8. Système de turbines selon la revendication 1,
**caractérisé en ce que**
l'axe de turbine (18) est constitué en tant qu'arbre ayant un diamètre

$$D1 = f_{10} \times R1$$

avec $f_{10}$ = 0,03 à 0,13.

9. Système de turbines selon la revendication 1,
**caractérisé en ce que**
les deux turbines (1, 2) tournent en sens inverse.

10. Système de turbines selon la revendication 1,
**caractérisé en ce**
**qu'**il est prévu un générateur annulaire pour la production de courant.

11. Éolienne et/ou centrale hydroélectrique selon la revendication 1,

**caractérisée en ce que**
le générateur peut être commandé pour le réglage du rapport de vitesse optimal en bout de pale de la turbine (1, 2).

**12.** Système de turbines selon la revendication 1,
**caractérisé en ce que**
le système de turbines est, par le biais d'une jonction tournante (10, 11, 12, 13, 14), fixé sur un mât (5), un ponton, une fondation, un toit de bâtiment ou similaire.

**13.** Système de turbines selon la revendication 1,
**caractérisé en ce que**
plusieurs de ces systèmes de turbines sont montés sur un mât (5) les uns sur les autre et/ou les uns à côté des autres.

**14.** Système de turbines selon la revendication 1,
**caractérisé en ce que**
le système de turbines tourne dans la direction optimale d'écoulement de vent ou d'eau de façon autonome sans dispositif de suivi entraîné par moteur et sans commande et sans répartiteur de vent supplémentaire.

**15.** Système de turbines selon la revendication 1,
**caractérisé en ce que**
la distance entre le répartiteur de vent (3) en forme de V et les turbines (1, 2) est réglable.

**16.** Système de turbines selon la revendication 1,
**caractérisé en ce que**
la zone inférieure du mât (5) et/ou le répartiteur de vent (3) est constitué en tant qu'espace publicitaire ou support publicitaire.

**17.** Système de turbines selon la revendication 1,
**caractérisé en ce que**
l'axe de pivotement (15) présente une jonction tournante (10, 11, 12, 13, 14) et **en ce que**, au-dessus de la jonction tournante (10, 11, 12, 13, 14), il est prévu un mât en treillis sur lequel un système d'accumulateur et/ou un système de support de turbines peut être fixé.

**18.** Système de turbines selon la revendication 1,
**caractérisé en ce**
**qu'**il est prévu un dispositif de rapprochement automatique des turbines radiales (1, 2) lorsqu'une vitesse de vent prédéfinie est atteinte.

**19.** Système de turbines selon la revendication 1,
**caractérisé en ce que**
les turbines radiales (1, 2) sont réparties en plusieurs turbines individuelles supportées individuellement le long d'un arbre.

**20.** Système de turbines selon la revendication 17,
**caractérisé en ce que**,
au-dessous de la jonction tournante (10, 11, 12, 13, 14), il est prévu un espace de sécurité protégé et mis à la terre pour loger des composants technologiques sensibles, dans lequel l'espace de sécurité présente de préférence une ventilation et/ou un chauffage et/ou une climatisation appropriée (air conditioning), en particulier en ce qui concerne l'humidité de l'air.

**21.** Système de turbines selon la revendication 12,
**caractérisé en ce que**
la fondation peut être utilisée en tant qu'accumulateur d'énergie supplémentaire ou en tant que réservoir d'eau ou en tant que réservoir d'huile.

**22.** Système de turbines selon la revendication 12,
**caractérisé en ce que**
des pompes à chaleur sont intégrées dans la fondation.

23. Système de turbines selon la revendication 1,
**caractérisé en ce que**
des éléments à LED sont mis en place sur les pales de turbine (25, 203) et peuvent être pilotés en fonction de la rotation afin de produire des effets publicitaires.

24. Système de turbines selon la revendication 12,
**caractérisé en ce**
**qu'**un mât en treillis, y compris le support de turbines (7, 8, 9) et les turbines (1, 2), est fixé à une jonction tournante (10, 11, 12, 13, 14) du mât.

25. Système de turbines selon la revendication 1,
**caractérisé en ce**
**qu'**il est prévu un agencement des systèmes de turbines selon l'invention le long de l'infrastructure routière telle que routes, autoroutes, lignes ferroviaires, canaux, qui sert en plus à la télécommunication et/ou ou au stockage intermédiaire de courant en provenance du réseau pendant les périodes de faible prise de courant et/ou à l'utilisation en tant que support publicitaire et/ou en tant qu'éclairage routier et/ou pour la fourniture d'espaces de sécurité.

FIG.1

FIG.2

EP 2 619 449 B1

FIG.3

FIG.4

FIG.5

FIG.6

Stand der Technik

1

2

3

5

6

FIG.7

A-A

FIG.8

FIG.9

Wind

FIG.10

FIG.11

FIG.12

FIG. 13

FIG.14

FIG.15

FIG. 16

FIG. 17     FIG.18

FIG.19

FIG.20

FIG. 21

FIG.22

FIG. 23

FIG.24

FIG.25

FIG.26

301

303

302

A

305

306

A

304

Fig. 27a

A - A

Fig. 27b

Figur 28

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004099605 A2
- US 20040141845 A1